(19) Europäisches Patentamt

European Patent Office

Office européen des brevets

(11) **EP 1 643 574 A1**

(12) **EUROPEAN PATENT APPLICATION**
published in accordance with Art. 158(3) EPC

(43) Date of publication:
05.04.2006 Bulletin 2006/14

(51) Int Cl.:
*H01M 8/04* (1974.07)

(21) Application number: 04727727.2

(22) Date of filing: 15.04.2004

(86) International application number:
PCT/JP2004/005371

(87) International publication number:
WO 2004/093230 (28.10.2004 Gazette 2004/44)

(84) Designated Contracting States:
DE FR GB

(30) Priority: 17.04.2003 JP 2003112956

(71) Applicant: NISSAN MOTOR COMPANY, LIMITED
Yokohama-shi,
Kanagawa 221-0023 (JP)

(72) Inventor: KOIKE, Yuichi
Kanagawa 238-0023 (JP)

(74) Representative: Grünecker, Kinkeldey,
Stockmair & Schwanhäusser
Anwaltssozietät
Maximilianstrasse 58
80538 München (DE)

(54) **FUEL CELL SYSTEM AND METHOD OF CONTROLLING THE SAME**

(57) To ensure an output performance (EP) of a fuel cell stack (3) without providing excessive operation restriction, a controller (43) of a fuel cell system (1) is provided with: an operation restrictor (45) configured to restrict an operation of the stack (3) so that a delivered air temperature ($T_2$) of an air compressor (7) is kept from exceeding its upper limit (Lt) based on a sucked air temperature ($T_1$) detected by a temperature sensor (27) and an atmospheric pressure ($P_0$) detected by a pressure sensor (25), and configured to mitigate the restriction of the operation under a condition that drop of the sucked air temperature ($T_1$) is predicted; and an upper limit setter (47) configured to set an upper limit (Lp) of a delivered air pressure ($P_2$) of the air compressor (7) so that a temperature ($T_2$) of air delivered by the air compressor (7) is kept from exceeding its upper limit (Lt), based on the sucked air temperature ($T_1$) detected by the temperature sensor (27) and the atmospheric pressure ($P_0$) detected by the pressure sensor (25).

FIG.1

**Description**

TECHNICAL FIELD

The present invention relates to a fuel cell system, and a control method therefor, and particularly, to a fuel cell system and a control method therefor in which power generation of a fuel cell is restricted in accordance with a permissible temperature range of an oxidizer supplied to the fuel cell.

BACKGROUND ART

The fuel cell causes a fuel composed of, for example, a hydrogen gas, and an oxidizer composed of an oxidative gas containing oxygen, to react electrochemically via an electrolyte, taking out electric energy between electrodes provided with the electrolyte in between.
A solid polymer electrolyte fuel cell having an electrolyte made of a solid polymer is low in working temperature, and easy to handle, and employable as a vehicle-mounted power source in electric vehicles.
The electric vehicle having a fuel cell as an electric-power source causes hydrogen supplied from a vehicle-mounted hydrogen storage device (for example, a high-pressure hydrogen tank, a liquid hydrogen tank, or a hydrogen storing alloy tank) and air containing oxygen to react in the fuel cell, driving a motor connected to drive wheels of the vehicle with electric energy taken therefrom, simply emitting water as a reaction product, and is called an ultimate clean vehicle.
Those fuel cell systems employed on the ground are provided with an oxidizer supply system that compresses ambient air in an adiabatic manner, typically by an air compressor or air blowing fan, to supply a fuel cell with the air with a resultant increased temperature and pressure, as an oxidizer.
The following patent references 1 through 3 show techniques relating to a fuel cell system provided with an oxidizer supply system.

> Patent reference 1:
> Japanese Patent Application Laid-Open Publication No. 2000-12060 (page 3, FIG. 1)
> Patent reference 2:
> Japanese Patent Application Laid-Open Publication No. 2000-48838 (page 3, FIG. 2)
> Patent reference 3:
> Japanese Patent Application Laid-Open Publication No. 2000-48839 (page 3, FIG. 2)

The patent reference 1 employs air obtained with a relatively high temperature by operating an air compressor at a working point higher in pressure ratio than a normal operation, for promoting warm-up of a fuel reformer to shorten the startup period.
The patent references 2 and 3 employs an air blowing fan in an oxidizer supply system, and first estimate a rotational speed thereof under a standard condition (1 atmospheric pressure, 0°C) in dependence on a required fuel amount, and additionally correct a result of the estimation in accordance with an atmospheric pressure and an outside air temperature, to thereby enable oxidizer supply amount to a fuel cell to be appropriate, irrespective of the position of installation of the fuel cell or variation of meteorological condition.
In the case the pressure ratio of air compressor is increased in accordance with the patent reference 1, or in the case in any of patent references 1 through 3 the air compressor or blowing fan has sucked in high-temperature air, the delivery air temperature may have a sudden increase as a problem.

DISCLOSURE OF INVENTION

This problem can be dealt with, by restricting the delivery air pressure, as well as power generation of the fuel cell, in consideration of allowable temperatures of those parts located downstream of such an air compressor or blowing fan.
However, such an air compressor or blowing fan may have a suction port located, for example, near the fuel cell itself or its water-cooled radiator, which then constitutes a heat source, so that the temperature of sucked air is increased when the vehicle stops or runs at a low speed.
It therefore is required to restrict power generation of the fuel cell during startup or acceleration of the vehicle, in consideration of the delivery air temperature of air compressor not to exceed a prescribed temperature, wherewith such a situation may also be supposed that the fuel cell's performance could not be fully made use of.
The present invention is made with such points in view, and has it as the object to provide a fuel cell system and a control method therefor that allow for power generation of a fuel cell to be restricted in dependence on a permissible range of supply temperature of an oxidizer, enabling a performance of the fuel cell to be made use of in accordance with the situation.

To achieve the object, according to an aspect of the invention, there is provided a fuel cell system comprising: a fuel cell configured to be supplied with a fuel gas containing hydrogen and an oxidative gas containing oxygen; an air supplier configured to supply air to the fuel cell; a sucked air temperature detector configured to detect a temperature of air sucked by the air supplier; an atmospheric pressure detector configured to detect an atmospheric pressure; and a control apparatus configured to control an operation of the fuel cell, wherein the control apparatus comprises an operation restrictor configured to: restrict an operation of the fuel cell so that the temperature of air delivered from the air supplier is kept from exceeding a predetermined upper limit, based on the sucked air temperature detected by the sucked air temperature detector and the atmospheric pressure detected by the atmospheric pressure detector; and mitigate the restriction of the operation under a predetermined condition.

To achieve the object, according to another aspect of the invention, there is provided a fuel cell system comprising: a supply system configured to supply utilities containing an oxidizer; a fuel cell configured to generate electric power by using the utilities supplied from the supply system; and a controller configured to control the supply system to operate the fuel cell, wherein the controller comprises: a first control part configured to restrict a supply condition of the oxidizer; and a second control part configured to mitigate the restriction of the supply condition, depending on an operational state of the supply system.

To achieve the object, according to another aspect of the invention, there is provided a control method for a fuel cell system comprising a fuel cell configured to be supplied with a fuel gas containing hydrogen and an oxidative gas containing oxygen, an air supplier configured to supply air to the fuel cell, a sucked air temperature detector configured to detect a temperature of air sucked by the air supplier, an atmospheric pressure detector configured to detect an atmospheric pressure, and a control apparatus configured to control an operation of the fuel cell, the method comprising: restricting an operation of the fuel cell so that the temperature of air delivered from the air supplier is kept from exceeding a predetermined upper limit, based on the sucked air temperature detected by the sucked air temperature detector and the atmospheric pressure detected by the atmospheric pressure detector; and mitigating the restriction of the operation under a predetermined condition.

To achieve the object, according to another aspect of the invention, there is provided a control method for a fuel cell system comprising a supply system configured to supply utilities containing an oxidizer, and a fuel cell configured to generate electric power by using the utilities supplied from the supply system, to control the supply system to operate the fuel cell, the method comprising: restricting a supply condition of the oxidizer; and mitigating the restriction of the supply condition, depending on an operational state of the supply system.

BRIEF DESCRIPTION OF DRAWINGS

FIG. 1 is a block diagram of a fuel cell system according to a first embodiment of the present invention.
FIG. 2 is a graph showing a relationship between a sucked air temperature and a delivered air pressure of an air compressor of the fuel cell system of FIG. 1, based on an experiment.
FIG. 3 is a control flowchart of a controller of the fuel cell system of FIG. 1.
FIG. 4 is a flowchart supplementing the control flowchart of FIG. 3.
FIG. 5 is a flowchart supplementing the control flowchart of FIG. 3.
FIG. 6 is a flowchart supplementing the flowchart of FIG. 5.
FIG. 7 is a flowchart showing a first variant of the first embodiment.
FIG. 8A is a graph of a relationship between a sucked air temperature and an upper limit of delivered air pressure of the air compressor, based on an experiment.
FIG. 8B is a graph of a relationship between the delivered air pressure upper limit of the air compressor and an output power upper limit of a fuel cell stack, based on an experiment.
FIG. 8C is a graph of a relationship between the sucked air temperature of the air compressor and the output power upper limit of the fuel cell stack.
FIG. 9 is a flowchart of a second variant of the first embodiment.
FIG. 10 is a flowchart supplementing the flowchart of FIG. 9.
FIG. 11 is a flowchart supplementing the flowchart of FIG. 10.
FIG. 12 is a flowchart of a third variant of the first embodiment.
FIG. 13 is a flowchart supplementing the flowchart of FIG. 12.
FIG. 14 is a flowchart supplementing the flowchart of FIG. 12.
FIG. 15 is a flowchart of a fourth variant of the first embodiment.
FIG. 16 is a flowchart of a fifth variant of the first embodiment.

FIG. 17 is a control flowchart of a second embodiment of the present invention.

FIG. 18 is a block diagram of a fuel cell system of a vehicle according to a third embodiment of the present invention.

FIG. 19 is a graph of a relationship between a revolution number and a torque of a main motor of the vehicle of FIG. 18, and a relationship between the revolution number and an electric power of the main motor.

FIG. 20 is a time chart showing time-wise transitions of an accelerator opening degree, an electric power required by the main motor, and a pressure and temperature of delivered air of the air compressor, in a low speed range of the vehicle of FIG. 18.

FIG. 21 is a time chart showing time-wise transitions of an accelerator opening degree, an electric power required by the main motor, and a pressure and temperature of delivered air of the air compressor, in a medium to high speed range of the vehicle of FIG. 18.

FIG. 22 is a graph of a relationship among: a revolution number of the main motor; an electric power required by the main motor; and a correction factor for correcting a parameter value restricting an operation of the fuel cell stack, for mitigation of restriction, and another correction factor for correcting the parameter value for supplementation of mitigation.

FIG. 23 is a control flowchart for a controller of the fuel cell system shown in FIG. 18.

BEST MODE FOR CARRYING OUT THE INVENTION

There will be described embodiments of the present invention and variants thereof with reference to the accompanying drawings. Identical elements and functions are represented by the same reference numerals, respectively, for easier understanding.

(First embodiment)

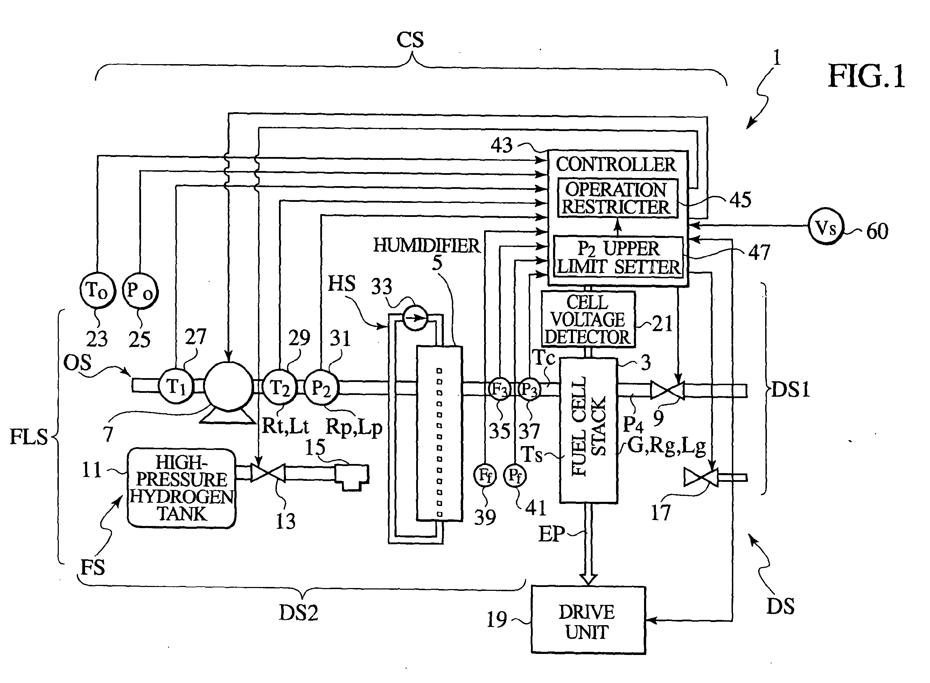

There will be firstly explained a first embodiment of the present invention, with reference to FIG. 1 through FIG. 6.

FIG. 1 is a block diagram of a fuel cell system 1 according to a first embodiment of the present invention. The fuel cell system 1 comprises: a fuel cell stack 3 acting as a main body of the fuel cell, and comprising an assembly of unit cells (not shown); a fluid supply system FLS configured to supply fluids required for an operation of the stack 3; a detection system DS including a stack state detecting system DS1 and a fluid state detecting system DS2 configured to detect action states of the stack 3 and fluid supply system FLS, respectively; and a control system CS configured to control the fluid supply system FLS based on a detection data acquired from the detection system DS, thereby controlling power generation of the stack 3.

Note that although the fuel cell system 1 comprises a drive unit 19 configured to act by electric power EP supplied from the stack 3 and the drive unit 19 is described as a main motor of an electric vehicle having the system 1 installed thereon, the drive unit is not limited thereto and may be a drive motor of a vehicle having the system 1 installed thereon or an electromotive drive part of a plant in an arbitrary scale to which the above system is applicable, for example. In this respect, the detection system DS includes a detecting system (not shown) configured to detect an operation state (i.e., manipulated state and behavior state) of the drive unit 19, and the control system CS includes a control element configured to estimate, as required, a behavior state (i.e., action and output) of the drive unit 19 based on the detection data of the detection system DS, and configured to appropriately control it.

The fluid supply system FLS includes: a fuel supply system FS configured to supply a fuel to the stack 3; an oxidizer supply system OS configured to supply an oxidizer to the stack 3; a pure water recirculating system HS configured to circulate pure water for humidifying a fuel and an oxidizer; and a cooling medium recirculating system (not shown) configured to circulate cooling water as a cooling medium for cooling the stack 3 so as to properly hold its operation temperature.

The fuel supply system FS comprises a group of fluid circuit elements, as required, including: a high-pressure hydrogen tank 11 configured to store therein gaseous hydrogen as a fuel; an adjustable valve 13 configured to conduct flow control of high-pressure hydrogen taken out of the tank 11; a purge valve 17 configured to appropriately emit high-pressure hydrogen to the outside; and an ejector 15 configured to flow unused hydrogen exiting from the stack 3 to the downstream side thereof, back to the upstream side of the stack.

The oxidizer supply system OS comprises a group of fluid circuit elements, as required, including: an air compressor 7 acting as an air supply device configured to compress sucked outside air and deliver it as an oxidizer; and a throttle 9 configured to control a pressure and a flow rate of air to be supplied to the stack 3.

The pure water recirculating system HS comprises a group of fluid circuit elements, as required, including: a pure water pump 33 configured to circulate pure water; a humidifier 5 configured to humidify the fuel and oxidizer, by the circulating pure water.

The cooling medium recirculating system comprises a group of fluid circuit elements, as required, including: a cooling medium flow passage provided in the stack 3; a radiator configured to radiate heat of the cooling medium to the outside of the line; and a cooling medium pump configured to circulate the cooling medium.

The stack state detecting system DS1 comprises a group of detection elements, as required, including a cell voltage detector 21 configured to detect a voltage of unit cells or cell group constituting the stack 3.

The fluid state detecting system DS2 comprises a group of detection elements, as required, including: a temperature sensor 23 and a pressure sensor 25 configured to detect a temperature $T_0$ and a pressure $P_0$ of outside air, respectively; a temperature sensor 27 configured to detect a temperature $T_1$ of air to be sucked into the air compressor 7; a temperature sensor 29 and a pressure sensor 31 configured to detect a temperature $T_2$ and a pressure $P_2$, respectively, of air delivered as an oxidizer from the air compressor 7; a flow sensor 35 and a pressure sensor 37 configured to detect a flow rate $F_3$ and a pressure $P_3$, respectively, of air humidified by the humidifier 5 and flowing into the stack 3; and a flow sensor 39 and a pressure sensor 41 configured to detect a flow rate $F_f$ and a pressure $P_f$, respectively, of hydrogen humidified by the humidifier 5 and flowing into the stack 3. Note that the outside air temperature ($T_0$) sensor 23 is installed at a position which is not affected by a heat source (such as the stack 3 or the radiator of cooling water therefor) in the system 1.

The control system CS includes a controller 43 configured to read outputs of the detection system DS including the sensors 23, 25, 27, 29, 31, 35, 37, 39, and 41 and the cell voltage detector 21, and to control, based on a built-in control program, actuators of active circuit elements of the fluid supply system FLS, including the adjustable valve 13 and purge valve 17 of the fuel supply system FS, and the air compressor 7 and throttle 9 of the oxidizer supply system OS.

The stack 3 is configured to: conduct power generation such that hydrogen and air supplied into the stack and then branched into unit cells are reacted within the cells; and collect the electric power (electric current) acquired in all the cells, so as to supply the electric power to the drive unit 19, as required. Hydrogen and air flowed into each cell are caused to flow through mutually independent flow passages, and the reaction between hydrogen and air is conducted through an electrolyte membrane (solid polymer membrane in this embodiment) provided between the flow passages.

Unused air left after reaction in the cells is collected via air merge passage among the cells, and is emitted to the outside of the system 1 via throttle 9 downstream of the stack 3. Further, although unused hydrogen left after reaction in the cells is collected via hydrogen merge passage among the cells and thereafter flowed back to the upstream side of the humidifier 5 via ejector 15, the unused hydrogen may be emitted to the outside of the system 1 via purge valve 17 depending on the situation.

Branch passages into the cells, flow passages within the cells, and merge passages among the cells, all for hydrogen and air, serve as passive fluid circuit elements of the fuel supply system FS and oxidizer supply system OS, respectively. Thus, the pressures $P_2$ and $P_3$ within the oxidizer supply system OS are determined depending on a reduced pressure $P_4$ by the throttle 9:

$$P_2 = f_1(P_4), \text{ and } P_3 = f_2(P_4)$$

Herein, $f_i$ (i=natural number) represents a function having multiple variables including those variables other than indicated.

The temperature $T_2$ of air delivered from the air compressor 7 depends on the temperature $T_1$ and compression ratio ($P_0/P_2$) of air sucked into the air compressor 7, and the temperature $T_2$ has an upper limit Lt of an permissible range Rt imposed by thermal performance Tc of those fluid circuit elements of the oxidizer supply system OS which are located downstream of the air compressor 7:

$$T_2 = f_3(T_1, P_0/P_2) = f_3\{T_1, P_0/f_1(P_4)\}$$
$$= f_4(T_1, P_0, P_4)$$

$$T_2 \leq Lt = f_5(Tc)$$

Meanwhile, the stack 3 has an output power (or generated electric power) G having an upper limit Lg of an permissible range Rg imposed by an working temperature $T_s$ of the stack 3, and in turn, the working temperature $T_s$ depends on the temperature $T_2$ of air delivered from the air compressor 7:

$$Lg = f_6(T_s), \ T_s = f_7(T_2),$$

$$Lg=f_6\{f_7(T_2)\}=f_8(T_2)$$

Thus, the output power G of the stack 3 has the upper limit Lg of the permissible range Rg, which depends on the temperature $T_1$ of the sucked air and which is restricted by the thermal performance Tc of the fluid circuit elements of the oxidizer supply system OS:

$$Lg=f_8\{f_4(T_1,\ P_0,\ P_4)\}=f_9(T_1,\ P_0,\ P_4)$$
$$=f_9\{T_1,\ P_0,\ f_1^{-1}(P_2)\}=f_{10}(T_1,\ P_0,\ P_2)$$

$$G\leq Lg=f_{11}(Tc)$$

The controller 43 is configured to read detection data of the detection system DS to estimate a target electric power amount for the stack 3 based on the operation state of the drive unit 19 in a manner: to determine control target values of active fluid circuit elements of the fluid supply system FLS including the air compressor 7, throttle 9, and adjustable valve 13 so as to attain the target electric power amount; and to calculate required control amounts of the elements, respectively, based on comparison of the detection data with the current data, to conduct control commensurately with the comparison results; so that the controller 43 conducts the control to supply a required electric power EP (electric current) from the stack 3 to the drive unit 19.

As such, the controller 43 comprises: an operation restrictor 45 configured to restrict the operation of the stack 3 based on the sucked air temperature $T_1$ detected at the temperature sensor 27 and the atmospheric pressure $P_0$ detected at the pressure sensor 25 so that the temperature $T_2$ of air delivered from the air compressor 7 is kept from exceeding the upper limit Lt of the permissible range Rt of the temperature $T_2$, and configured to mitigate the restriction level, as required or under a predetermined condition; and an upper limit setter 47 for the pressure ($P_2$) of air delivered from the air compressor 7, configured to set an upper limit Lp of the delivered air pressure $P_2$ so as to restrict the temperature $T_2$ of air delivered from the air compressor 7 to the upper limit Lt or lower, thereby defining an permissible range Rp of the delivered air pressure $P_2$. The upper limit Lp is set based on the sucked air temperature $T_1$ and the atmospheric pressure $P_0$, and the operation restriction against the stack 3 by the operation restrictor 45 is mitigated by changing the set value.

This embodiment is configured by taking notice of a phenomenon that acceleration of a fuel cell vehicle having the system 1 installed thereon upon starting or during lower speed running causes the sucked air temperature $T_1$ of the air compressor 7 to be lowered by virtue of running airstream and to be finally substantially equalized to the outside air temperature $T_0$, in a manner that such a phenomenon is utilized to mitigate the operation restriction against the stack 3 to improve an efficiency of the system 1, to thereby avoid an excessive operation restriction against the stack 3 by taking account of a transient change of the sucked air temperature $T_1$ upon determining the upper limit Lt of the delivered air temperature $T_2$ of the air compressor 7.

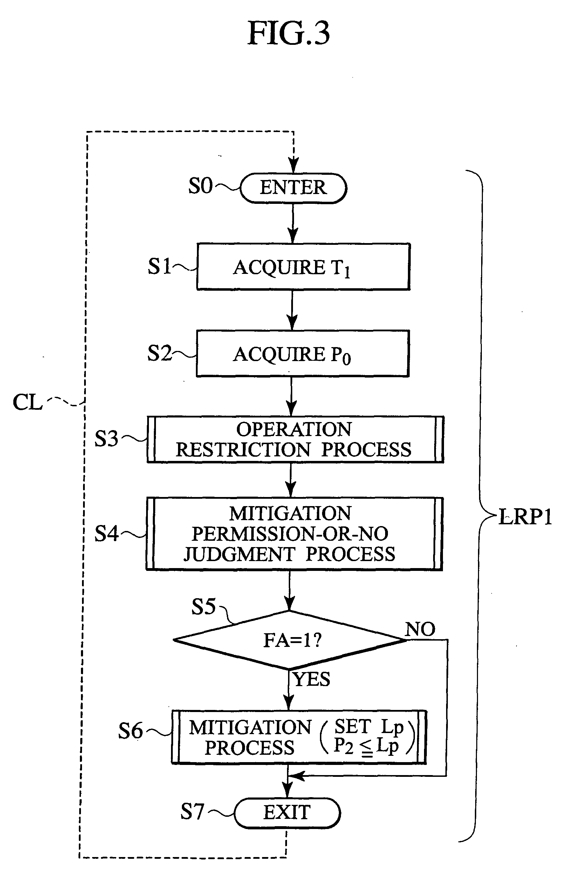

Namely, there is calculated a change of the sucked air temperature $T_1$ upon restricting operation of the stack 3 by setting the upper limit Lp of the delivered air pressure $P_2$ so as to keep the temperature $T_2$ at its upper limit Lt or lower by detecting the sucked air temperature $T_1$ of the air compressor 7 and the atmospheric pressure Po; and when drop of the temperature $T_1$ is predicted, the upper limit Lp of the delivered air pressure $P_2$ is corrected commensurately with a drop rate to thereby conduct a process (corresponding to step S6 in FIG. 3) for mitigating an operation restriction against the stack 3, thereby avoiding an excessive operation restriction.

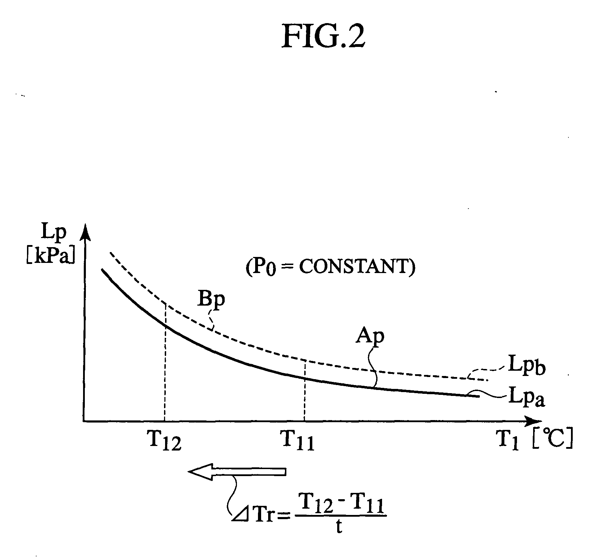

Although there is now described an example of corrective calculation for the delivered air pressure upper limit Lp with reference to FIG. 2, the present invention is not limited to this example.

FIG. 2 is a graph of a relationship between the sucked air temperature $T_1$ [°C] and the delivered air pressure upper limit Lp [kPa] of the air compressor 7 in this system 1 based on an experiment conducted under a condition that the atmospheric pressure $P_0$=constant, and shows a curve Ap (solid line) corresponding to a relationship in a non-mitigation state of operation restriction (i.e., in a normal operation restriction state), and a curve Bp (broken line) corresponding to a relationship in a mitigation state of operation restriction in a criterional (i.e., experimented) transient state.

Firstly, there is conducted a real machine experiment under a constant atmospheric pressure $P_0$ [kPa], to thereby record a static relationship (curve Ap) between: the sucked air temperature $T_1$ [°C]; and an upper limit $Lp_a$ [kPa] of the delivered air pressure $P_2$ for keeping the delivered air temperature $T_2$ derived from the temperature $T_1$, at the upper limit Lt [°C] of the temperature $T_2$, or lower.

Next, there is conducted an experiment for uniformly dropping the sucked air temperature $T_1$ of the air com-

pressor 7 over a predetermined temperature difference (from $T_{11}$ [°C] to $T_{12}$ [°C] in FIG. 2, for example) for a predetermined period of time, "t" seconds; and there are recorded: a drop rate $-\Delta T_r$ [°C/s] {i.e., criterional temperature drop rate=$(T_{12}-T_{11})/t$}; and a relationship (curve Bp) between the sucked air temperature $T_1$ [°C] and a delivered air pressure upper limit $Lp_b$ [kPa], in the criterional transient state (i.e., a dynamic state where the sucked air temperature $T_1$ is dropped at a criterional change rate $\Delta T_r$).

Then, in operation of the system 1 installed on the fuel cell vehicle, and based on the drop rate $-\Delta T_d$ [°C/s] of the sucked air temperature $T_1$ calculated from a comparison of the sucked air temperature $T_1$ detected in the current control cycle with a temperature $T_1$ detected in the preceding cycle or a cycle prior thereto; the static upper limit $Lp_a$ [kPa] of the delivered air pressure $P_2$ commensurate with the sucked air temperature $T_1$ in the current cycle, is corrected in the following equation (1) by a correction amount $\Delta Lp=(Lp_b-Lp_a)(\Delta T_d/\Delta T_r)$ obtained, interpolatedly or extrapolatedly as required, from a proportional allotment between the static upper limit $Lp_a$ and the dynamic upper limit $Lp_b$ in the standard transient state and corresponding to the upper limit $Lp_a$; and the thus corrected value is adopted as the delivered air pressure upper limit Lp in an actual transient state:

$$Lp=Lp_a+\Delta Lp$$
$$=Lp_a+(Lp_b-Lp_a)(\Delta T_d/\Delta T_r)\cdots(1)$$

There will be now explained an operation of the system 1 with reference to FIG. 3 through FIG. 6.

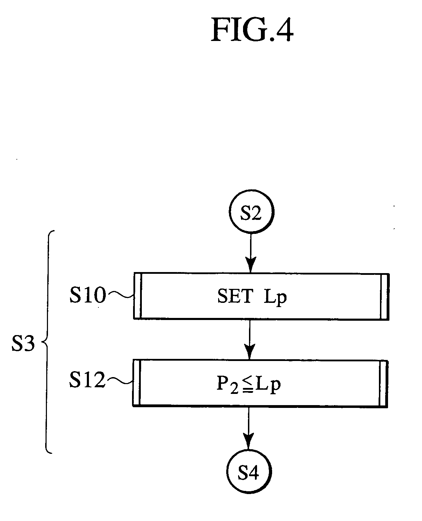

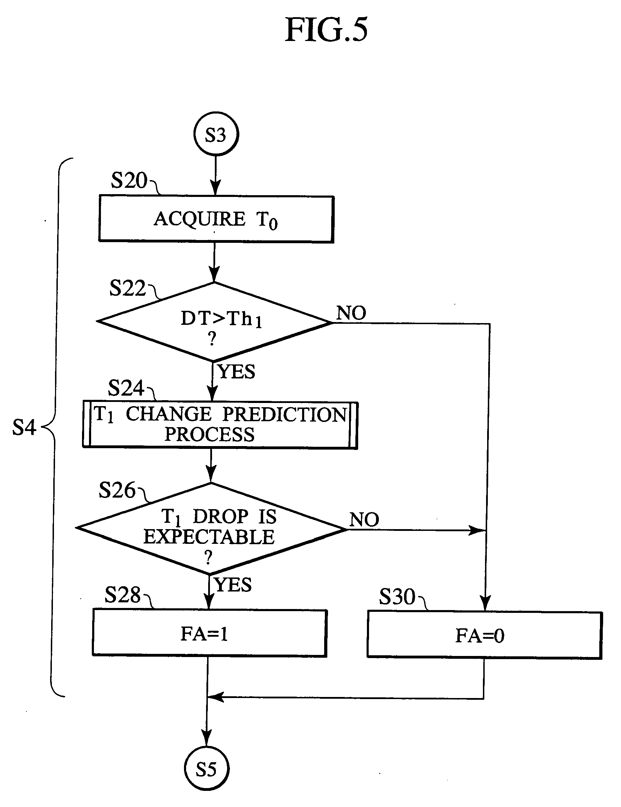

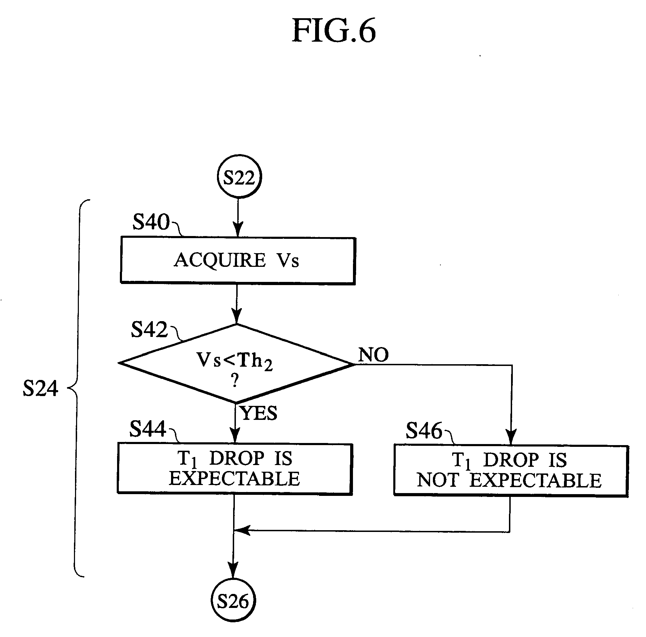

FIG. 3 is a control flowchart of the controller 43, FIG. 4 and FIG. 5 are flowcharts supplementing the control flowchart of FIG. 3, and FIG. 6 is a flowchart supplementing the flowchart of FIG. 5.

The controller 43 is configured to conduct operation restriction of the system 1, based on the atmospheric pressure $P_0$ detected by the pressure sensor 25 and the sucked air temperature $T_1$ of the air compressor 7 detected by the temperature sensor 27. More particularly, the controller 43 "controls the operation (i.e., manipulated amount and action) of the fluid supply system FLS to thereby control the operation (i.e., power generative action) of the stack 3, and to control the supply electric power EP to the drive unit 19 as required" (this control will be called hereinafter "operation restriction of stack 3", or simply called "operation restriction" or "restriction (of operation)" depending on the context). Further, there is conducted a process for mitigating the operation restriction against the stack 3, depending on the operational state of he system 1 recognized by the controller 43.

The controller 43 has its control cycle CL (FIG. 3) configured to execute an operation restriction/mitigation process LRP1 of FIG. 3, during each time slot (duration of 10 [ms], for example) after issuance of an operation start command for the stack 3. Namely, the control flow enters the process LRP1 at step S0, and exits the process LRP1 at step S7. Note that the result of the process LRP1 in the current cycle (i.e., current time slot) is maintained until the same is updated by the process LRP1 in the next cycle (i.e., time slot next to the current cycle) or in a cycle thereafter.

As shown in FIG. 3, the control flow advances from step S0 to step S1.

At step S1, there is acquired a sucked air temperature $T_1$ of the air compressor 7 detected by the temperature sensor 27 in the current cycle (i.e., the central processing unit of the controller 43 samples detection data in the current cycle and stores it in a memory, thereby preparing for reading in cycles after the current cycle). The control flow advances from step S1 to step S2.

At step S2, there is acquired an atmospheric pressure $P_0$ detected by the pressure sensor 25 in the current cycle. The control flow advances from step S2 to step S3 (operation restriction process).

At step S3, the operation restriction process shown in FIG. 4 is conducted based on the stored data including the sucked air temperature $T_1$ and atmospheric pressure $P_0$ acquired in the current cycle, thereby setting a static upper limit Lp (such as $Lp_a$ in FIG. 2) of a delivered air pressure $P_2$. The control flow advances from step S3 to step S4 (mitigation permission-or-no judgment process in a basic manner).

At step S4, the mitigation permission-or-no judgment process shown in FIG. 5 is conducted to judge whether mitigation of operation restriction is possible and is to be permitted, or mitigation of operation restriction is impossible and is to be rejected, to thereby establish a value of mitigation permission flag FA ("1"=permission, and "0"=rejection). The control flow advances from step S4 to step S5.

At step S5, it is judged which of "1" and "0" the value of mitigation permission flag FA established at step S4 has, such that the control flow (YES) advances from step S5 to step S6 (mitigation process) when FA="1", and the control flow (NO) advances from step S5 to step S7 when FA="0".

At step S6, the above described operation restriction mitigation process is executed. Namely, the static upper limit Lp of the delivered air pressure $P_2$ set at step S3 in the current cycle is corrected (by exemplarily assigning the Lp to the static upper limit $Lp_a$ in the above equation (1)) to thereby settle a dynamic upper limit Lp corresponding to a current transient state, and the operation restriction against the stack 3 is conducted in accordance with this upper limit Lp {i.e., in a manner to attain ($P_2 \leq$ dynamic Lp)}. The control flow advances from step S6 to step S7.

Reference is now made to FIG. 4, for further explanation of the operation restriction process at step S3.

As shown in FIG. 4, the control flow advances from step S2 to step S10 (limit value setting process).

At step S10, based on the sucked air temperature $T_1$ and atmospheric pressure $P_0$ acquired in the current cycle, there is calculated and set a static upper limit Lp of the delivered air pressure $P_2$ which is assumed to keep the delivered air temperature $T_2$ at its upper limit Lt or lower. The control flow advances from step S10 to step S12 (restriction executing process).

At step S12, there is confirmed a delivered air pressure upper limit Lp to be currently followed. Namely, when the mitigation permission flag FA="0" established in the preceding cycle, the static upper limit set in the current cycle is regarded as an upper limit Lp to be currently followed. Further, when FA="1", regarded as an upper limit Lp to be currently followed, is an appropriate one of a dynamic upper limit set in the preceding cycle and a static upper limit set in the current cycle (more particularly, that one which smoothly follows the operation in the preceding cycle or before). Further, based on the upper limit Lp, the delivered air pressure $P_2$ of the air compressor 7 is controlled {such that ($P_2 \leq$ Lp)}, thereby restricting the operation of the stack 3. The control flow advances from step S12 to step S4.

The calculation of the delivered air temperature $T_2$ and upper limit Lt thereof to be used in the estimative calculation at step S10, is conducted by using the stored data including, for example, the upper limit Lt of the delivered air temperature $T_2$ based on: the sucked air temperature $T_1$; the atmospheric pressure $P_0$; an overall adiabatic efficiency of the air compressor 7; and the thermal performance Tc of fluid circuit elements of the oxidizer supply system OS.

Note that it is also possible to realize mitigation of operation restriction against the stack 3 in a transient state of a sucked air temperature $T_1$, by setting an upper limit Lt of the delivered air temperature $T_2$ of the air compressor 7 instead of the upper limit Lp of the delivered air pressure $P_2$ of the air compressor 7, and by controlling the delivered air pressure $P_2$ so that the delivered air temperature $T_2$ detected by the temperature sensor 29 is kept from exceeding the thus set upper limit Lt of the temperature $T_2$.

The mitigation permission-or-no judgment process at step S4 will be further described with reference to FIG. 5.

As shown in FIG. 5, the control flow advances from step S3 to step S20.

At step S20, there is acquired an outside air temperature $T_0$ detected by the temperature sensor 23 in the current cycle. The control flow advances from step S20 to step S22.

At step S22, it is judged whether or not: a temperature difference DT between the sucked air temperature $T_1$ acquired in the current cycle and the outside air temperature $T_0$ acquired in the current cycle (in which, $DT=T_1-T_0$); exceeds a commensurate threshold $Th_1$. The control flow (YES) advances from step S22 to step S24 (change prediction process) when $DT>Th_1$, while the control flow (NO) advances from step S22 to step S30 when $DT \leq Th_1$.

At step S24, there is predicted a change of the sucked air temperature $T_1$ in accordance with the change prediction process shown in FIG. 6, and it is judged whether or not a drop of sucked air temperature $T_1$ is expectable. The control flow advances from step S24 to step S26.

At step S26, there is confirmed a judgment result at step S24. Further, when drop of the sucked air temperature $T_1$ is expectable, the control flow (YES) advances from step S26 to step S28. When drop of the sucked air temperature $T_1$ is not expectable, the control flow (NO) advances from step S26 to step S30.

At step S28, the mitigation permission flag FA is brought to be FA="1". The control flow advances from step S28 to step S5.

At step S30, the mitigation permission flag FA is brought to be FA="0". The control flow advances from step S30 to step S5.

The ($T_1$) change prediction process at step S24 will be further described with reference to FIG. 6.

As shown in FIG. 6, the control flow advances from step S22 to step S40.

At step S40, there is acquired a vehicle speed Vs detected in the current cycle by a vehicle speed sensor 60 of the fuel cell vehicle having the system 1 installed thereon. The control flow advances from step S40 to step S42.

At step S42, it is judged whether or not the vehicle speed Vs acquired in the current cycle is less than a commensurate $Th_2$ (such as 5 [km/h]). The control flow (YES) advances from step S42 to step S44 when $0 \leq Vs < Th_2$, and the control flow (NO) advances from step S42 to step S46 when $Vs \geq Th_2$.

At step S44, it is judged that there can be expected, after the current cycle, a meaningful drop of the sucked air temperature $T_1$ by virtue of running airstream accompanying to starting or acceleration of the vehicle. The control flow advances from step S44 to step S26.

At step S46, it is judged that there can not be expected, after the current cycle, a meaningful drop of the sucked air temperature $T_1$ by virtue of running airstream, since such a drop of temperature $T_1$ has already reached the vicinity of a saturated state (i.e., a state where $DT=T_1-T_0=0$). The control flow advances from step S46 to step S26.

According to this embodiment, the mitigation permission flag FA is brought to be FA="1" (permission) at step S28, when it has been judged at step S22 that the sucked air temperature $T_1$ is higher than the outside air temperature $T_0$ by the predetermined temperature difference $Th_1$ and it has been judged at step S44 that there can be expected a drop of sucked air temperature $T_1$ after the current cycle. Namely, the purpose is to mitigate the operation restriction against the stack 3 by detecting a transient state where there can be expected a commensurate drop of the sucked air

temperature $T_1$ when the fuel cell vehicle has started from its stop state or has been accelerated from a running state at an extremely lower speed such that the vehicle speed Vs is to be gradually increased. This allows the system 1 to be operated in a manner for positively assisting an acceleration performance of the fuel cell vehicle.

According to this embodiment, the upper limit Lp of the delivered air pressure $P_2$ is set so as to keep the delivered air temperature $T_2$ of the air compressor 7 at its upper limit Lt or lower, so that the delivered air pressure $P_2$ is controlled to be kept from exceeding the upper limit Lp. Thus, the delivered air temperature $T_2$ never exceeds the upper limit Lt even when the operation restriction against the stack 3 is mitigated, thereby allowing avoidance of excessive operation restriction in a transient state where the sucked air temperature $T_1$ of the air compressor 7 is dropped.

There will be explained multiple variants in which the control flow for the first embodiment is partly modified.

(First Variant of First Embodiment)

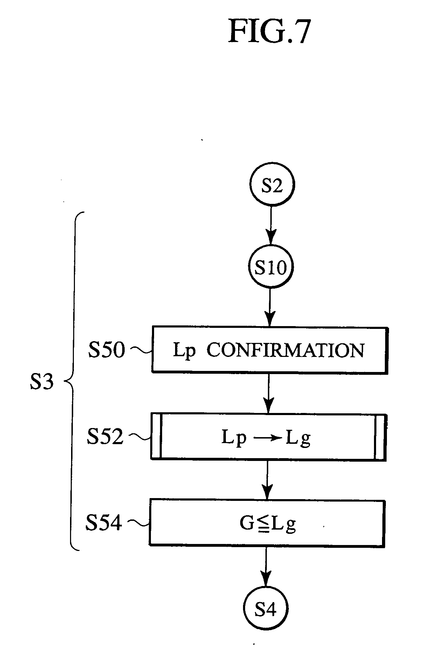

There will be explained a first variant of the first embodiment with reference to FIG. 7.

This variant is configured to diversify the operation restriction against the stack 3 by parameter conversion, and is different from the first embodiment in that the process detail of step S3 (operation restriction process) in FIG. 3 is changed from the flow shown in FIG. 4 to a flow shown in FIG. 7. More particularly, step S12 (restriction executing process) in FIG. 4 is substituted by steps S50, S52, and S54 in FIG. 7.

As shown in FIG. 7, the control flow of the first variant advances from step S2 (FIG. 3), through step S10 (limit value setting process in FIG. 4), to step S50.

At step S50, there is confirmed a delivered air pressure upper limit Lp to be currently followed. The control flow advances from step S50 to step S52 (parameter conversion process).

At step S52, the delivered air pressure upper limit Lp to be currently followed is parameter converted into an output power upper limit Lg of the stack 3 (i.e., an upper limit of electric power extractable from the stack 3). This upper limit Lg may be represented by an output electric current of the stack 3. The control flow advances from step S52 to step S54.

At step S54, the fluid supply system FLS is controlled to conduct operation restriction such that the output power (or generated electric power) G of the stack 3 becomes $G \leq Lg$. The control flow advances from step S54 to step S4 (mitigation permission-or-no judgment process in FIG. 3).

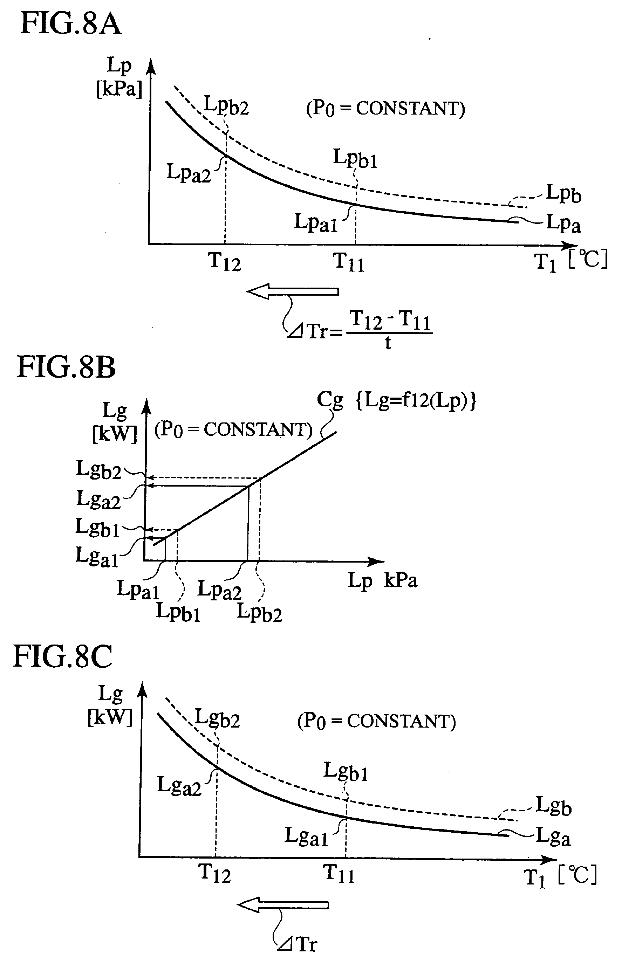

There will be now further explained step S52 (parameter conversion process) in FIG. 7 with reference to FIG. 8A through FIG. 8C.

FIG. 8A is a graph corresponding to FIG. 2 and showing a relationship (curve $Lp_a$, and curve $Lp_b$) between a sucked air temperature $T_1$ of the air compressor 7 and an upper limit Lp of a delivered air pressure $P_2$ of the air compressor 7, based on an experiment; FIG. 8B is a graph for parameter conversion ($Lp \rightarrow Lg$), showing a relationship (curve Cg) between the delivered air pressure upper limit Lp of the air compressor 7 and the output power upper limit Lg of the stack 3, based on an experiment; and FIG. 8C is a graph showing a relationship (curve $Lg_a$ and curve $Lg_b$) between the sucked air temperature $T_1$ of the air compressor 7 and the output power upper limit Lg of the stack 3, acquired through the parameter conversion ($Lp \rightarrow Lg$).

As shown in FIG. 8A, under a condition that atmospheric pressure Po=constant, the curve $Lp_a$ representing a static relationship between the sucked air temperature $T_1$ and the delivered air pressure upper limit Lp, exemplifies that $Lp=Lp_{a1}$ when $T_1=T_{11}$, and $Lp=Lp_{a2}$ when $T_1=T_{12}$, for example. In turn, according to the curve $Lp_b$ representing a dynamic relationship between the sucked air temperature $T_1$ and the delivered air pressure upper limit Lp in a transient state where the sucked air temperature $T_1$ is dropped at a criterional change rate $\{\Delta T_r=(T_{12}-T_{11})/t\}$ under the same condition that $P_0$=constant; $Lp=Lp_{b1}$ when $T_1=T_{11}$, and $Lp=Lp_{b2}$ when $T_1=T_{12}$.

As shown in FIG. 8B, the curve Cg representing a relationship between the delivered air pressure upper limit Lp and the output power upper limit Lg under a condition that the atmospheric pressure $P_0$=constant, is substantially linear and continuous, such that $Lg=Lg_{a1}$ when $Lp=Lp_{a1}$, $Lg=Lg_{b1}$ when $Lp=Lp_{b1}$, $Lg=Lg_{a2}$ when $Lp=Lp_{a2}$, and $Lg=Lg_{b2}$ when $Lp=Lp_{b2}$. Namely, the limit value restricting the operation of the stack 3 is converted from the parameter Lp into the parameter Lg by the curve Cg {i.e., corresponding continuous mapping function $Lg=f_{12}(Lp)$}, such that $Lp_{a1} \rightarrow Lg_{a1}$, $Lp_{b1} \rightarrow Lg_{b1}$, $Lp_{a2} \rightarrow Lg_{a2}$, and $Lp_{b2} \rightarrow Lg_{b2}$.

As shown in FIG. 8C and according to the parameter conversion, there is acquired a curve $Lg_a$ representing a static relationship between the sucked air temperature $T_1$ and the output power upper limit Lg under a condition that atmospheric pressure $P_0$=constant, and there is acquired a curve $Lg_b$ representing a dynamic relationship between the sucked air temperature $T_1$ and the output power upper limit Lg in a transient state where the sucked air temperature $T_1$ is dropped at the criterional change rate ($\Delta T_r$) under a condition that atmospheric pressure Po=constant. The curve $Lg_a$ representing the static relationship exemplifies that $Lg=Lg_{a1}$ when $T_1=T_{11}$, and $Lg=Lg_{a2}$ when $T_1=T_{12}$, for example. The curve $Lg_b$ representing the dynamic relationship exemplifies that $Lg=Lg_{b1}$ when $T_1=T_{11}$ and $Lg=Lg_{b2}$ when $T_1=T_{12}$.

Note that it is possible to conduct the parameter conversion ($Lp \rightarrow Lg$) also in the mitigation process at step S6, in execution of the control flow CL (FIG. 3) including the operation restriction process (FIG. 7) in this variant.

In such a case, the mitigation of operation restriction is executed by converting the dynamic upper limit Lp of the delivered air pressure $P_2$ into a dynamic upper limit Lg of the output power (or generated electric power) G based on the mapping function $Lg=f_{12}(Lp)$ in FIG. 8B, and by controlling the output power G such that $G \leq Lg$.

However, in case of existence of a data map corresponding to FIG. 8C in operation of the system 1 installed on the fuel cell vehicle, and based on the drop rate $-\Delta T_d$ [°C/s] of the sucked air temperature $T_1$ calculated from a comparison of the sucked air temperature $T_1$ detected in the current control cycle with a temperature $T_1$ detected in the preceding cycle or a cycle prior thereto; the static upper limit $Lg_a$ [kW] of the output power G commensurate with the sucked air temperature $T_1$ in the current cycle, is corrected in the following equation (2) by a correction amount $\Delta Lg = (Lg_b - Lg_a)(\Delta T_d / \Delta T_r)$ obtained, interpolatedly or extrapolatedly as required, from a proportional allotment between the static upper limit $Lg_a$ and the dynamic upper limit $Lg_b$ in the standard transient state and corresponding to the upper limit $Lg_a$; and the thus corrected value is adopted as the output power upper limit Lg in an actual transient state, similarly to the setting of dynamic Lp:

$$Lg = Lg_a + \Delta Lg$$
$$= Lg_a + (Lg_b - Lg_a)(\Delta T_d / \Delta T_r) \cdots (2)$$

(Second Variant of First Embodiment)

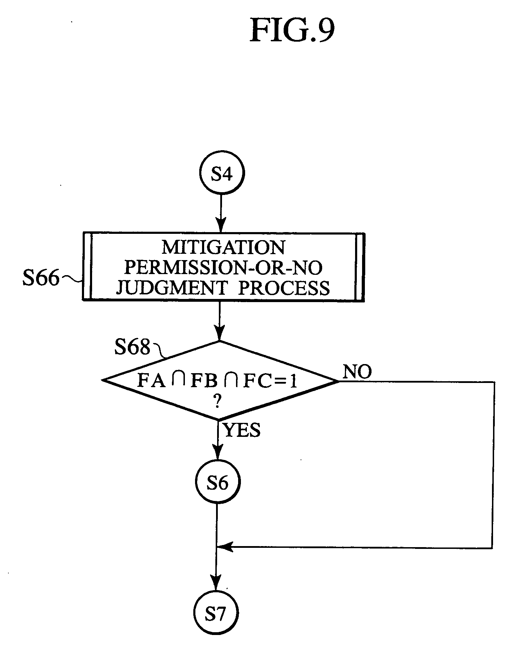

There will be explained a second variant of the first embodiment with reference to FIG. 9 through FIG. 11.

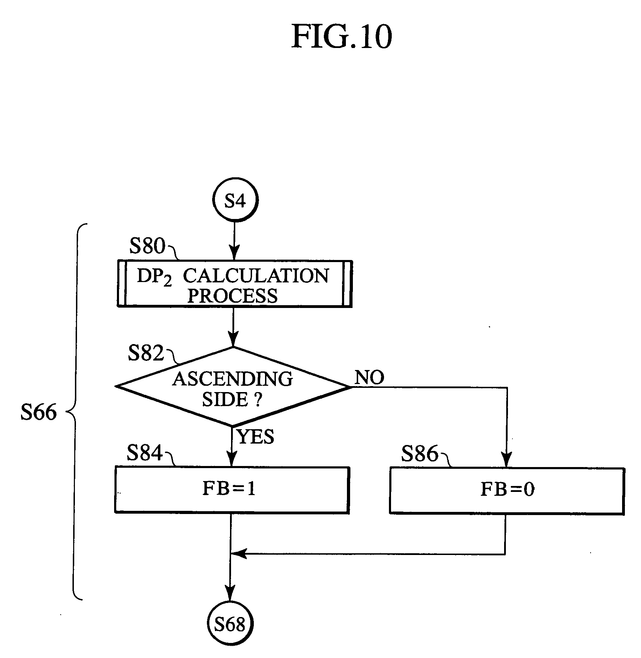

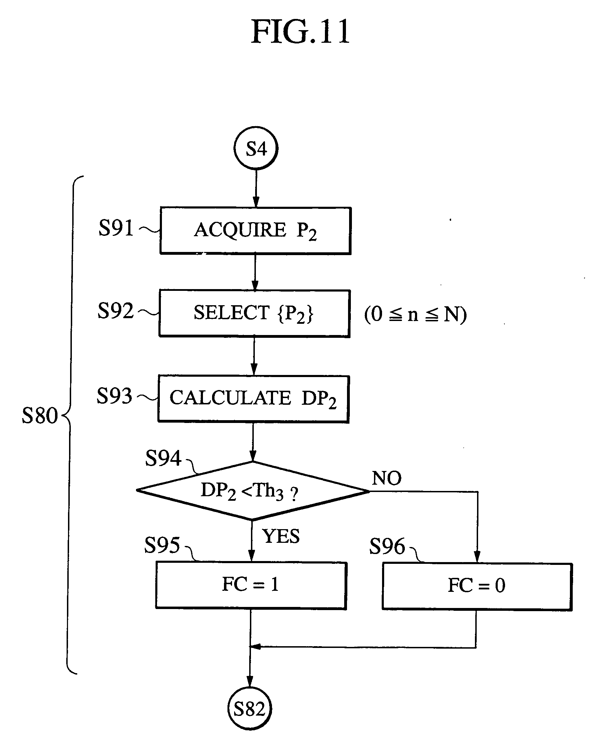

This variant is configured to apply another restriction commensurately with a pressure change of an oxidizer to the mitigation of operation restriction against the stack 3, and is different from the first embodiment in that step S5 (permissibility judgment) after step S4 (mitigation permission-or-no judgment process in a basic manner) in FIG. 3 is substituted by a combination of step S66 (mitigation permission-or-no judgment process in a supplementary manner) and step S68 (permissibility judgment) shown in FIG. 9. Note that FIG. 10 and FIG. 11 are flowcharts showing process details at step S66 in FIG. 9.

As shown in FIG. 9, the control flow of the second variant advances from step S4 (mitigation permission-or-no judgment process in a basic manner) to step S66 (mitigation permission-or-no judgment process in a supplementary manner).

At step S66, there is executed a mitigation permission-or-no judgment process in a supplementary manner in accordance with the flows of FIG. 10 through FIG. 11, thereby establishing values of a judgment flag FB {FB="1" (permission) or FB="0" (rejection)} shown in FIG. 10 and a judgment flag FC {FC="1" (permission) or FC="0" (rejection)}. The control flow advances from step S66 to step S68.

At step S68, it is judged whether or not AND (logical product FA∩FB∩FC) of the flag FA (FIG. 5) and judgment flag FB and judgment flag FC is "1". When the logical product is "1", the control flow (YES) advances from step S68 to step S6 (mitigation process in FIG. 3).

When the logical product is not "1" (i.e., FA∩FB∩FC="0"), the control flow (NO) advances from step S68 to step S7 (FIG. 3), thereby exiting the operation restriction/mitigation process LRP1 (FIG. 3) in the current cycle.

The mitigation permission-or-no judgment process at step S66 will be further explained with reference to FIG. 10.

As shown in FIG. 10, the control flow of this variant advances from step S4 (mitigation permission-or-no judgment process in a basic manner) to step S80 (pressure change calculation process).

At step S80, there is selected, in accordance with the flow shown in FIG. 11, a predetermined size of subset {$P_2$(0≤"n"≤N: "n" is a number of lapsed cycles; and N is a predetermined natural number)} including appropriate two $P_2$ data from among a universal set {$P_2$(0≤"n")} of data of delivered air pressure $P_2$ including a delivered air pressure $P_2$ (number "n" of lapsed cycles=0) acquired in the current cycle and delivered air pressures $P_2$(number "n" of lapsed cycles≥1) acquired in the preceding cycle and cycles prior thereto; and there is executed a process for calculating a pressure change $DP_2$ among the elements of the subset. The control flow advances from step S80 to step S82 (mitigation permission-or-no judgment).

At step S82, it is judged whether or not the pressure change $DP_2$ is caused at an ascending side of the delivered air pressure $P_2$, by a logical operation based on a value comparison among the elements of the subset {$P_2$(0≤"n"≤N)}. If it is a change at the ascending side, the control flow (YES) advances from step S82 to step S84. If not, the control flow (NO) advances from step S82 to step S86.

Note that the calculation of the pressure change $DP_2$ at step S80 may be conducted as an algebraic difference or numerical differentiation among the elements of the subset {$P_2$(0≤"n"≤N)}, in a manner to conduct the judgment at step S82 based on the sign (positive or negative) of the algebraic difference or numerical differentiation.

At step 584, the value of the judgment flag FB is brought to be "1" (permission). The control flow advances from step S84 to step S68 (FIG. 9).

At step S86, the value of the judgment flag FB is brought to be "0" (rejection). The control flow advances from step S86 to step S68 (FIG. 9).

The pressure change ($DP_2$) calculation process at step S80 will be now further described with reference to FIG. 11.

As shown in FIG. 11, the control flow in this variant advances from step S4 (mitigation permission-or-no judgment process in a basic manner) to step S91 (data acquisition).

At step S91, there is acquired a delivered air pressure $P_2("n"=0)$ detected in the current cycle by the sensor 31 in FIG. 1. The control flow advances from step S91 to step S92 (data selection).

At step S92, there is selected a subset ($P_2(0 \leq "n" \leq N$: N=2 in this variant); i.e., $P_2("n"=0)$, $P_2("n"=1)$, and $P_2("n"=2)$} consisting of (N+1) data including appropriate two $P_2$ data {$P_2("n"=0)$ and $P_2("n"=1)$ in this variant} from among the universal set {$P_2(0 \leq "n")$} of data of delivered air pressure $P_2$ acquired up to then (and thus stored in the memory); and the pressure change $DP_2$ among the elements of the set is calculated in the following manner:

$$\text{When } P_2("n"=0)-P_2("n"=1) \geq 0,$$

$$DP_2 = P_2("n"=0)-P_2("n"=1).$$

Meanwhile,

$$\text{when } P_2("n"=0)-P_2("n"=1) < 0,$$

$$\text{when } P_2("n"=0)-P_2("n"=2) \geq 0,$$

$$DP_2 = \{P_2("n"=0)-P_2("n"=2)\}/2,$$

and

$$\text{when } P_2("n"=0)-P_2("n"=2) < 0,$$

$$DP_2 = 0.$$

Note that the pressure change $DP_2$ may be obtained as follows, by adopting N=1 for the size of the subset {$P_2(0 \leq "n" \leq N)$}:

$$DP_2 = \left| P_2("n"=0)-P_2("n"=1) \right|.$$

The pressure change $DP_2$ represents a change rate of delivered air pressure $P_2$ per time slot.

The control flow advances from step S93 to step S94 (mitigation permission-or-no judgment).

At step S94, it is judged whether or not the pressure change $DP_2$ is less than a predetermined threshold $Th_3$. When the pressure change $DP_2$ is less than the threshold $Th_3$ (i.e., $DP_2 < Th_3$), the control flow (YES) advances from step S94 to step S95. If not (i.e., $DP_2 \geq Th_3$), the control flow (NO) advances from step S94 to step S96.

At step S95, the value of judgment flag FC is brought to be "1" (permission). The control flow advances from step S95 to step S82 (FIG. 10).

At step S96, the value of judgment flag FC is brought to be "0" (rejection). The control flow advances from step S96 to step S82 (FIG. 10).

According to this variant, it is acquired that FB∩FC=0 when the delivered air pressure $P_2$ has ascended (FB="1") at a predetermined change rate ($Th_3$) or more (FC="0") such that mitigation of operation restriction is rejected (FA∩FB∩FC=FA∩(FB∩FC)="0"), thereby facilitating the operation of the stack 3 while keeping the delivered air temperature $T_2$ at the upper limit Lt or lower.

(Third Variant of First Embodiment)

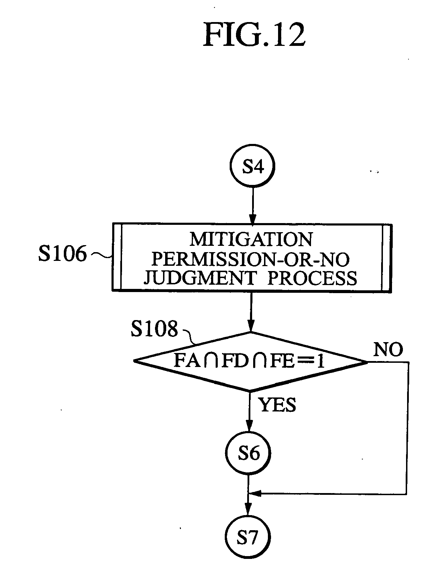

There will be explained a third variant of the first embodiment with reference to FIGS. 12 through 14.

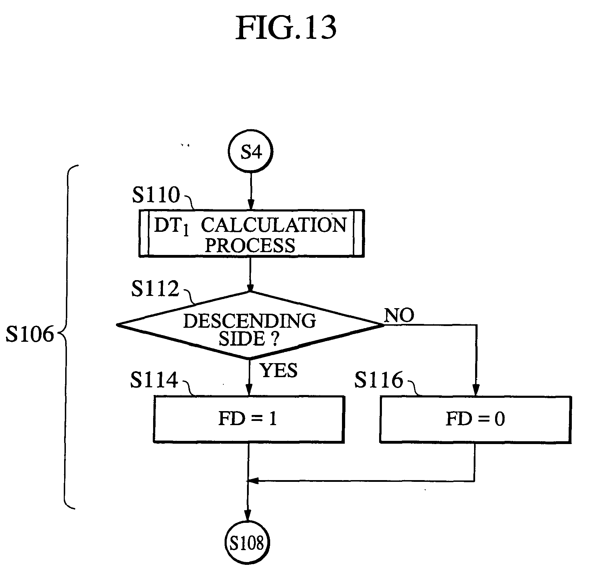

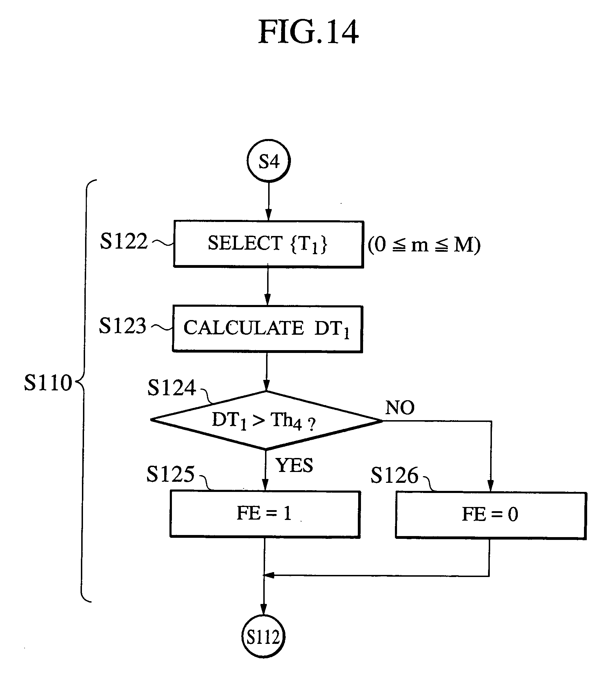

This variant is configured to apply another restriction commensurately with a temperature change of a sucked air of the air compressor 7 to the mitigation of operation restriction against the stack 3, and is different from the first embodiment in that step S5 (permissibility judgment) after step S4 (mitigation permission-or-no judgment process in a basic manner) in FIG. 3 is substituted by a combination of step S106 (mitigation permission-or-no judgment process in a supplementary manner) and a step S108 (permissibility judgment) shown in FIG. 12. Note that FIG. 13 and FIG. 14 are flowcharts showing process details of step S106 in FIG. 12.

As shown in FIG. 12, the control flow in the third variant advances from step S4 (mitigation permission-or-no judgment process in a basic manner) to step S106 (mitigation permission-or-no judgment process in a supplementary manner).

At step S106, there is executed the mitigation permission-or-no judgment process in a supplementary manner in accordance with the flows of FIG. 13 through FIG. 14, thereby establishing values of a judgment flag FD {FD="1" (permission) or FD="0" (rejection)} shown in FIG. 13 and a judgment flag FE {FE="1" (permission) or FE="0" (rejection)} shown in FIG. 14. The control flow advances from step S106 to step S108.

At step S108, it is judged whether or not AND (logical product: $FA \cap FD \cap FE$) of the flag FA (FIG. 5) and flag FD and flag FE is "1". If the logical product is "1", the control flow (YES) advances from step S108 to step S6 (mitigation process in FIG. 3).

If the logical product is not "1" (i.e., $FA \cap FD \cap FE$="0"), the control flow (NO) advances from step S108 to step S7 (FIG. 3), and exits the operation restriction/mitigation process LRP1 (FIG. 3) in the current cycle.

The mitigation permission-or-no judgment process at step S106 will be now further explained with reference to FIG. 13.

As shown in FIG. 13, the control flow of this variant advances from step S4 (mitigation permission-or-no judgment process in a basic manner) to step S110 (temperature change calculation process).

At step S110, there is selected, in accordance with the flow shown in FIG. 14, a predetermined size of subset $\{T_1(0 \leq$ "m" $\leq M$: "m" is a number of lapsed cycles; and M is a predetermined natural number)$\}$ including appropriate two $T_1$ data from among a universal set $\{T_1(0 \leq$ "m"$)\}$ of data of sucked air temperature $T_1$ including a sucked air temperature $T_1$(number "m" of lapsed cycles=0) acquired at step S1 (FIG. 3) in the current cycle and sucked air temperatures $T_1$ (number "m" of lapsed cycles$\geq 1$) acquired in the preceding cycle and cycles prior thereto; and there is executed a process for calculating a temperature change $DT_1$ among the elements of the subset. The control flow advances from step S110 to step S112 (mitigation permission-or-no judgment).

At step S112, it is judged whether or not the temperature change $DT_1$ is caused at a descending side of the sucked air temperature $T_1$, by a logical operation based on a value comparison among the elements of the subset $\{T_1(0 \leq$ "m" $\leq M)\}$. If it is a change at the descending side, the control flow (YES) advances from step S112 to step S114. If not, the control flow (NO) advances from step S112 to step S116.

Note that the operation for the temperature change $DT_1$ at step S110 may be conducted as an algebraic difference or numerical differentiation among the elements of the subset $\{T_1(0 \leq$ "m" $\leq M)\}$, in a manner to conduct the judgment at step S112 based on the sign (positive or negative) of the algebraic difference or numerical differentiation.

At step S114, the value of the flag FD is brought to be "1" (permission). The control flow advances from step S114 to step S108 (FIG. 12).

At step S116, the value of the flag FD is brought to be "0" (rejection). The control flow advances from step S116 to step S108 (FIG. 12).

The temperature change ($DT_1$) calculation process will be now further described with reference to FIG. 14.

As shown in FIG. 14, the control flow of this variant advances from step S4 (mitigation permission-or-no judgment process in a basic manner) to step S122 (data selection).

At step S122, there is selected a subset $\{T_1(0 \leq$ "m" $\leq M$: M=2 in this variant); i.e., $T_1$("m"=0), $T_1$("m"=1), and $T_1$ ("m"=2)$\}$ consisting of (M+1) data including appropriate two $T_1$ data $\{T_1$("m"=0) and $T_1$("m"=1) in this variant$\}$ from among the universal set $\{T_1(0 \leq$ "m"$)\}$ of data of sucked air temperature $T_1$ acquired up to then (and thus stored in the memory). The control flow advances from step S122 to step S123 ($DT_1$ calculation).

At step S123, the temperature change $DT_1$ among the elements of the subset $\{T_1$("m"=0), $T_1$("m"=1), and $T_1$ ("m"=2)$\}$ is calculated in the following manner:

$$\text{When } T_1(\text{"m"}=0)\text{-}T_1(\text{"m"}=1) \leq 0,$$

$$DT_1 = T_1("m"=1) - T_1("m"=0).$$

Meanwhile,

$$when\ T_1("m"=0) - T_1("m"=1) > 0,$$

$$when\ T_1("m"=0) - T_1("m"=2) \leq 0,$$

$$DT_1 = \{T_1("m"=2) - T_1("m"=0)\}/2,$$

and

$$when\ T_1("m"=0) - T_1("m"=2) > 0,$$

$$DT_1 = 0.$$

Note that the temperature change $DT_1$ may be obtained as follows, by adopting M=1 for the size of the subset $\{T_1(0 \leq "m" \leq M)\}$:

$$DT_1 = |T_1("m"=0) - T_1("m"=1)|.$$

The temperature change $DT_1$ represents a change rate of sucked air temperature $T_1$ per time slot.

The control flow advances from step S123 to step S124 (mitigation permission-or-no judgment).

At step S124, it is judged whether or not the temperature change $DT_1$ exceeds a predetermined threshold $Th_4$. When the temperature change $DT_1$ exceeds the threshold $Th_4$ (i.e., $DT_1 > Th_4$), the control flow (YES) advances from step S124 to step S125. If not (i.e., $DT_1 \leq Th_4$), the control flow (NO) advances from step S124 to step S126.

At step S125, the value of the flag FE is brought to be "1" (permission). The control flow advances from step S125 to step S112 (FIG. 13).

At step S126, the value of the flag FE is brought to be "0" (rejection). The control flow advances from step S126 to step S112 (FIG. 13).

According to this variant, it is acquired that FD∩FE=0 when the sucked air temperature $T_1$ has descended (FD="1") at a predetermined change rate ($Th_4$) or less (FE="0") such that mitigation of operation restriction is rejected {FA∩FD∩FE=FA∩(FD∩FE)="0"}, thereby facilitating the operation of the stack 3 while keeping the delivered air temperature $T_2$ at the upper limit Lt or lower.

(Fourth Variant of First Embodiment)

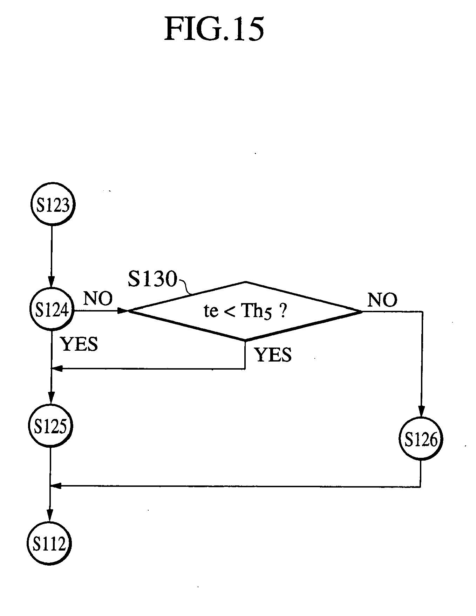

This variant is configured to prolong the mitigation period of operation restriction in the third variant commensurately with a temperature ascending inertia of the oxidizer supply system OS, and is different from the third variant in that there is provided step S130 for judging whether or not an elapsed time "te" from a start of rejection (based on temperature restriction) is shorter than a predetermined threshold $Th_5$ as shown in FIG. 15, along the control flow (FIG. 14) at the time of mitigation rejection (NO) based on the change of air temperature ($T_1$), so as to return the flow to the mitigation permission (YES) side while the elapsed time "te" is less than the threshold (i.e., "te"<$Th_5$).

The elapsed time "te" will be called a prolonged time of mitigation permission hereinafter, since the flow is returned to the mitigation permission (YES) side until the prolonged time "te" reaches the threshold ($Th_5$) irrespectively of a fact that the elapsed time "te" can be regarded as a period of time during which the delivered air temperature $T_2$ exceeds its upper limit Lt ($T_2 > Lt$).

As shown in FIG. 15, the control flow of this variant advances, after execution of $DT_1$ calculation at step S123, to step S124 for judgment of mitigation permission-or-no, and the control flow advances from step S124 to step S125 when the judgment result is mitigation permission (YES), thereby bringing the permission flag FE to be "1", and then advances to next step S112 (FIG. 13).

When the judgment result at step S124 is mitigation rejection (NO), the control flow advances to step S130 to judge whether or not the prolonged time "te" is shorter than the threshold ($Th_5$).

While the prolonged time "te" is shorter than the threshold ("te"<$Th_5$), the control flow (YES) advances from step S130 to step S125 (FE="1").

When the prolonged time "te" becomes equal to or larger than the threshold ("te"≥$Th_5$), the control flow (NO) advances from step S130 to step S126, thereby bringing the permission flag FE to be "0". The control flow advances from step S126 to step S112 (FIG. 13).

Note that the threshold ($Th_5$) is settled by calculating a temperature ascending rate of fluid circuit elements and associated parts at and downstream of the air compressor 7 constituting the oxidizer supply system OS, based on a heat transfer coefficient and heat capacity of each part, while taking account of a temperature of an element or part having the lowest thermally allowable temperature. However, this threshold may be experimentally determined.

According to this variant, the controller 43 serves to permit the mitigation of operation restriction, insofar as any one of fluid circuit elements and associated parts at and downstream of the air compressor 7 constituting the oxidizer supply system OS does not ascend in temperature up to its thermally allowable temperature, even when the delivered air temperature $T_2$ of the air compressor 7 exceeds the upper limit Lt associatedly with mitigation of operation restriction.

In this respect, the upper limit Lt of the delivered air temperature $T_2$ is set based on the thermal performance Tc (FIG. 1) of the fluid circuit elements of the oxidizer supply system OS.

Thus, there is set an upper limit Lt uniformly for each of components including the air compressor 7, humidifier 5, and stack 3 constituting the oxidizer supply system OS, by comparing thermally allowable temperatures of the components with one another and based on the component (unit cell, for example) having the lowest thermally allowable temperature. As such, even when the delivered air temperature $T_2$ of the air compressor 7 has exceeded the upper limit Lt, there is required a due period of time until the component as a basis reaches the thermally allowable temperature by resultant temperature elevation of flow passages. This variant is configured to mitigate the operation restriction in a transient state taking account of such a period of time, so that any one of the components is never deteriorated in performance.

(Fifth Variant of First Embodiment)

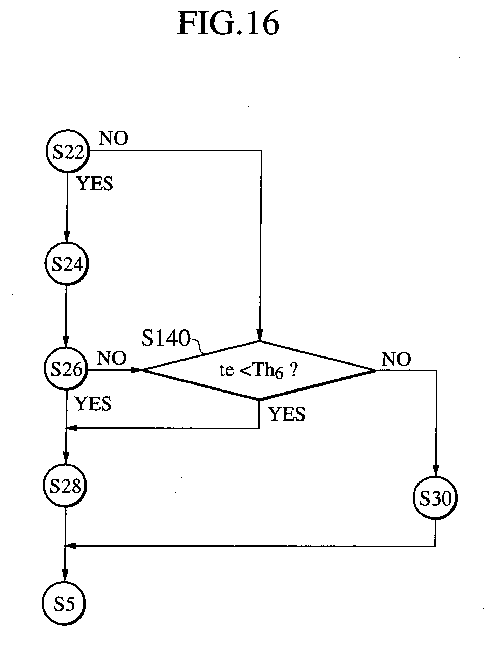

There will be explained a fifth variant of the first embodiment with reference to FIG. 16.

This variant is configured to prolong the mitigation period of operation restriction in the first embodiment commensurately with a temperature ascending inertia of the oxidizer supply system OS, and is different from the first embodiment in that there is provided step S140 for judging whether or not the elapsed time "te" from a start of rejection (based on temperature restriction) is shorter than a predetermined threshold ($Th_6$), along the control flow (FIG. 5) at the time of mitigation rejection (NO) based on a change of air temperature ($T_1$) in the current cycle or based on prediction of change of the air temperature in a cycle after the current cycle, so as to return the flow to the mitigation permission (YES) side while the elapsed time "te" is less than the threshold (i.e., "te"<$Th_6$).

Since also the elapsed time "te" corresponds to a prolonged time of mitigation permission, the former will be called so.

As shown in FIG. 16, the control flow of this variant is configured to judge at step S22 whether or not the temperature difference DT between the sucked air temperature $T_1$ and the outside air temperature $T_0$ exceeds the threshold Thi, and when it is judged so (YES), the control flow advances to step S24 to thereby execute the change prediction process of sucked air temperature ($T_1$). Then, the control flow advances to step S26 to judges whether or not a drop of sucked air temperature ($T_1$) can be expected, advances to step S28 when it is judged (YES) that drop can be expected, to thereby bring the mitigation permission flag FA to be "1" and thereafter advances to mitigation permission-or-no judgment step S5 (FIG. 2).

When it is judged (NO) at step S22 that the temperature difference DT is kept from exceeding the threshold $Th_1$, or when it is judged (NO) at step S26 that drop of sucked air temperature ($T_1$) can not be expected, the control flow advances to step S140 to judge whether or not the prolonged time "te" is shorter than the threshold ($Th_6$).

While the prolonged time "te" is shorter than the threshold ("te"<$Th_6$), the control flow (YES) advances from step S140 to step S28 (FA="1").

Once the prolonged time "te" becomes equal to the threshold or longer ("te"≥$Th_6$), the control flow (NO) advances from step S140 to step S30 to thereby bring the permission flag FA to be "0". The control flow advances from step S30 to step S5 (FIG. 2).

Note that also the threshold ($Th_6$) is settled by calculating a temperature ascending rate of fluid circuit elements and associated parts at and downstream of the air compressor 7 constituting the oxidizer supply system OS, based on a heat transfer coefficient and heat capacity of each part, while taking account of a temperature of an element or part having the lowest thermally allowable temperature. However, this threshold may be experimentally determined.

According to this variant, the controller 43 serves to mitigate the operation restriction to allow increase of electric power EP (or electric current) to be taken out of the stack 3, insofar as any one of fluid circuit elements and associated parts at and downstream of the air compressor 7 constituting the oxidizer supply system OS does not ascend in temperature up to its thermally allowable temperature, even when the delivered air temperature $T_2$ of the air compressor 7 exceeds the upper limit Lt associatedly with mitigation of operation restriction.

According to this variant, the mitigation of operation restriction in a transient state is continued up to a limit of a predetermined time rating, for a delivered air pressure $P_2$ equal to or less than its upper limit Lp, to thereby allow, during such a continued period, increase of the output power EP (or electric current) of the stack 3 in a state where the delivered air temperature $T_2$ is restricted to the upper limit Lt or lower, thereby enabling avoidance of excessive operation restriction.

(Second Embodiment)

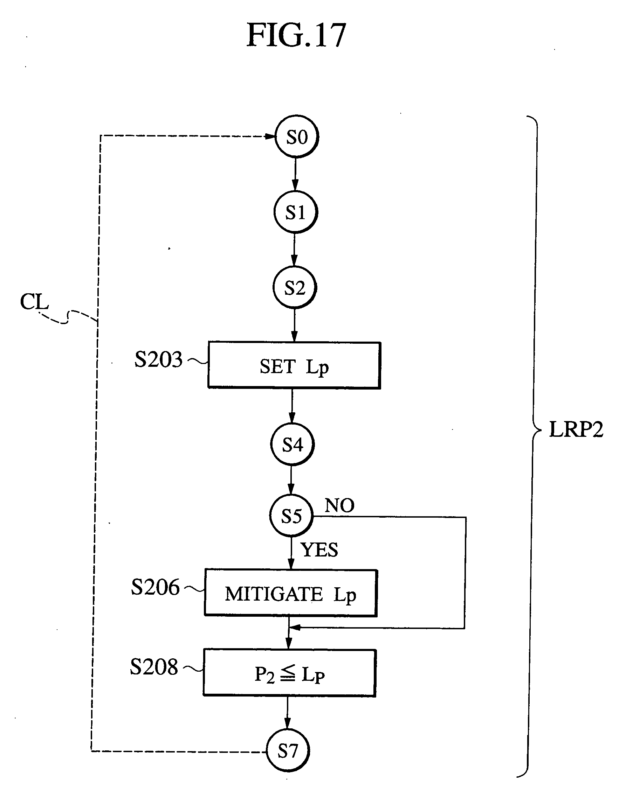

There will be now explained a second embodiment of the present invention with reference to FIG. 17. FIG. 17 is a control flowchart showing an operation restriction/mitigation process LRP2 according to the second embodiment.

This embodiment is different from the first embodiment, in that step S3 (operation restriction process) in FIG. 3 is changed to step S203, and step S6 (restriction mitigating process) in FIG. 3 is changed to step S206 and step S208.

As shown in FIG. 17, the control flow of the second embodiment is configured to advance from step $S_0$ (FIG. 3) to step S1 to acquire a sucked air temperature $T_1$, to further advance to step S2 for acquisition of delivered air pressure $P_2$, and to thereafter advance to step S203 (Lp setting process).

At step S203, there is calculated and set a static upper limit Lp of the delivered air pressure $P_2$ which is assumed to keep the delivered air temperature $T_2$ at its upper limit Lt or lower, based on the sucked air temperature $T_1$ and atmospheric pressure $P_0$ acquired in the current cycle, similarly to step S10 in FIG. 4.

The control flow advances from step S203 to step S4 (mitigation permission-or-no judgment process in a basic manner) so as to conduct there the mitigation permission-or-no judgment process shown in FIG. 5 to thereby judge whether mitigation of operation restriction is possible and is to be permitted, or mitigation of operation restriction is impossible and is to be rejected, to thereby establish a value of mitigation permission flag FA ("1"=permission, and "0"=rejection).

The control flow advances from step S4 to step S5, to judge which of "1" and "0" the value of the mitigation permission flag FA has. The control flow (YES) advances from step S5 to step S206 (Lp mitigation process) when FA="1", and the control flow (NO) advances from step S5 to step S208 (restriction execution).

At step S206, the value of Lp is mitigated (i.e., increased) by correcting the static upper limit Lp of the delivered air pressure $P_2$ set at step S203, to a dynamic upper limit Lp commensurate with a current transient state, similarly to step S6 in FIG. 3. The control flow advances from step S206 to step S208.

At step S208, there is conducted operation restriction against the stack 3 such that $P_2 \leq Lp$, in accordance with the current upper limit Lp (i.e., static upper limit Lp if FA="0" [mitigation rejection], and dynamic Lp if FA="1" [mitigation permission]). The control flow advances from step S208 to step S7 (FIG. 3).

According to this embodiment, there is omitted execution of operation restriction ($P_2 \leq L_p$) at step S12 in FIG. 4 (first embodiment), thereby eliminating the necessity of "confirmation of upper limit Lp to be currently followed".

It is justified to appropriately combine this embodiment with the variants of the first embodiment.

(Third Embodiment)

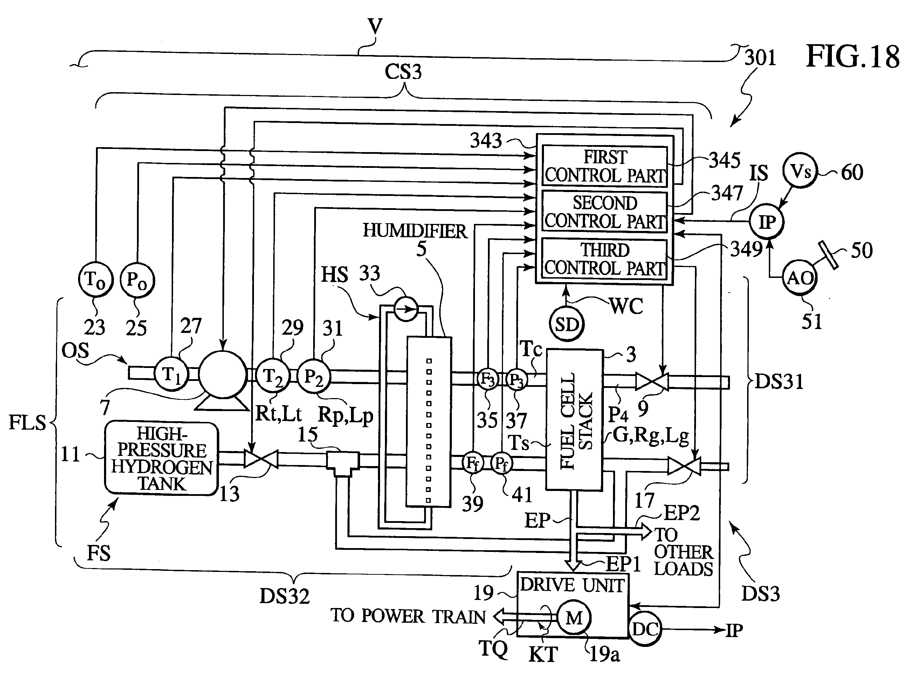

There will be explained a configuration of a fuel cell system 301 according to a third embodiment of the present invention. FIG. 18 is a block diagram of the fuel cell system 301. Identical elements and functions are represented by the same reference numerals as those in the first embodiment (FIG. 1), respectively, for easier understanding.

The fuel cell system 301 comprises: a fuel cell stack 3 configured to generate electric power EP to be supplied to a drive unit 19 and other electrical loads of a fuel cell vehicle V having the system 301 installed thereon; a fluid supply system FLS configured to supply fluids (i.e., utilities) required for operation of the stack 3; an information system $DS_3$ configured to collect information on operation (manipulation/action) states of the stack 3 and fluid supply system FLS, and on an operation (manipulation/action) state of the fuel cell vehicle V; and a control system $CS_3$ configured to control the fluid supply system FLS based on the information acquired from the information system $DS_3$, thereby controlling power generation of the stack 3.

The information system $DS_3$ includes: a stack information collecting system DS31 configured to collect information on the operation state of the stack 3; and a fluid supply information collecting system DS32 configured to collect information on the operation state of the fluid supply system FLS; and is further provided with an information provider IP configured to interface operational information IS on the vehicle V to a controller 343 of the control system $CS_3$.

The operational information IS to be interfaced by the information provider IP exemplarily includes: detection data from a pedal sensor 51 configured to detect manipulated amount (opening degree) AO of an acceleration pedal 50 of the vehicle V; detection data from a vehicle speed sensor 60 configured to detect a speed Vs of the vehicle V; and information DC on action of a main motor 19a constituting a drive unit 19 of the vehicle V.

Thus, included in the operational information IS are the accelerator opening degree AO, vehicle speed Vs, and motor operation information DC, for example. In turn, included in the motor operation information DC are: information on electric power EP1 to be inputted into (and consumed in) the main motor 19a of the drive unit 19, from the fuel cell stack 3; information on revolutions per minute KT of the main motor 19a; and information on a drive torque TQ outputted from the main motor 19a into a power train of the vehicle V.

It is possible to include, in the operational information IS, information on electric power EP2 to be supplied from the stack 3 into (and consumed in) those electrical loads (such as a heater in a passenger compartment, or an air conditioner in a luggage compartment) other than the main motor 19a of the vehicle V.

The stack information collecting system DS31 includes a stack detecting system SD (DS1 in FIG. 1) configured to detect a working condition WC of the stack 3, and this detecting system SD is configured to detect: voltages of unit cells of the stack 3; a cooling medium temperature in a cooling medium recirculating system, as data for estimating an working temperature of the stack 3; and a stack output electric current as data for calculating an output power EP of the stack 3.

The fluid supply information collecting system DS32 includes a fluid state detecting system (DS2 in FIG. 1) configured to detect an operation state of the fluid supply system FLS.

The controller 343 of the control system $CS_3$ includes the following three control parts:

### 1. First Control Part 345

This control part is configured to set a value of a parameter Lp for restricting operation of the stack 3 based on information on a static (i.e., normal) operation state of the fluid supply system FLS, and to restrict operation of the stack 3 in accordance with the limit value Lp. This corresponds to a combination of the operation restrictor 45 with a static limit value (Lp) setting function part of the upper limit setter 47 in the first embodiment (FIG. 1).

### 2. Second Control Part 347

This control part is configured to mitigate operation restriction against the stack 3 (imposed by the first control part 345), by conducting a process (hereinafter called "first correction") for correcting the limit value Lp set by the first control part 345, based on information on a dynamic (i.e., transient) operation state of the fluid supply system FLS. This corresponds to a dynamic limit value (Lp) setting function part of the upper limit setter 47 in the first embodiment (FIG. 1).

### 3. Third Control Part 349

This control part is configured to supplement the mitigation of operation restriction against the stack 3 (imposed by the first control part 345), by conducting a process (hereinafter called "second correction") for correcting the limit value Lp subjected to the first correction by the second control part 347, based on information on the operation state of the vehicle V.

Note that although this embodiment adopts an upper limit Lp (under a predetermined condition) of a variation range Rp allowed for a delivered air pressure $P_2$ of the air compressor 7, as a parameter for restricting the operation of the stack 3, it is also possible to substitute the parameter by another parameter compatible therewith such as a delivered air temperature upper limit Lt or output power upper limit Lg.

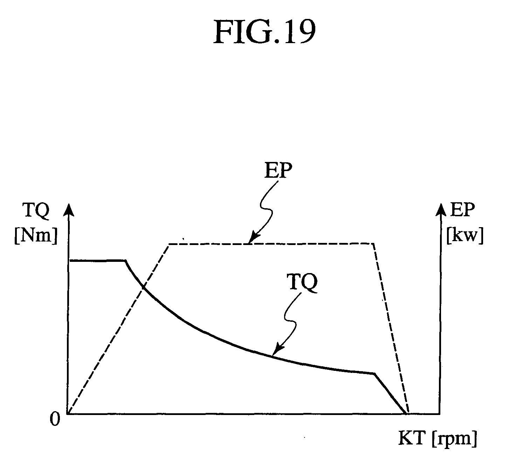

There will be now explained a specific relationship between the vehicle V and the fuel cell system 301 with reference to FIG. 19 through FIG. 21.

For facilitated understanding, electric power E1 to be consumed commensurately with an input electric current of the drive motor 19a, is regarded as output power EP of the stack 3 (i.e., EP2≠0). It is thus understood that the stack 3 outputs an electric power EP having a magnitude commensurate with a drive electric current of the motor 19a.

FIG. 19 shows a relationship (solid line) between the revolutions per minute KT and the output torque TQ, and a relationship (broken line) between the revolutions per minute KT and the electric power EP, of the drive motor 19a of the vehicle V.

The torque TQ of the motor 19a is relatively stable and large during low speed revolutions, is gradually decreased with increase of revolutions per minute KT, and is finally disabled in output upon reaching a critical speed. In turn, the electric power EP required to be outputted from the stack 3 is increased as the revolutions per minute KT is increased from an initial speed, is stabilized from a medium speed range through a high speed range, and is steeply decreased near the critical speed.

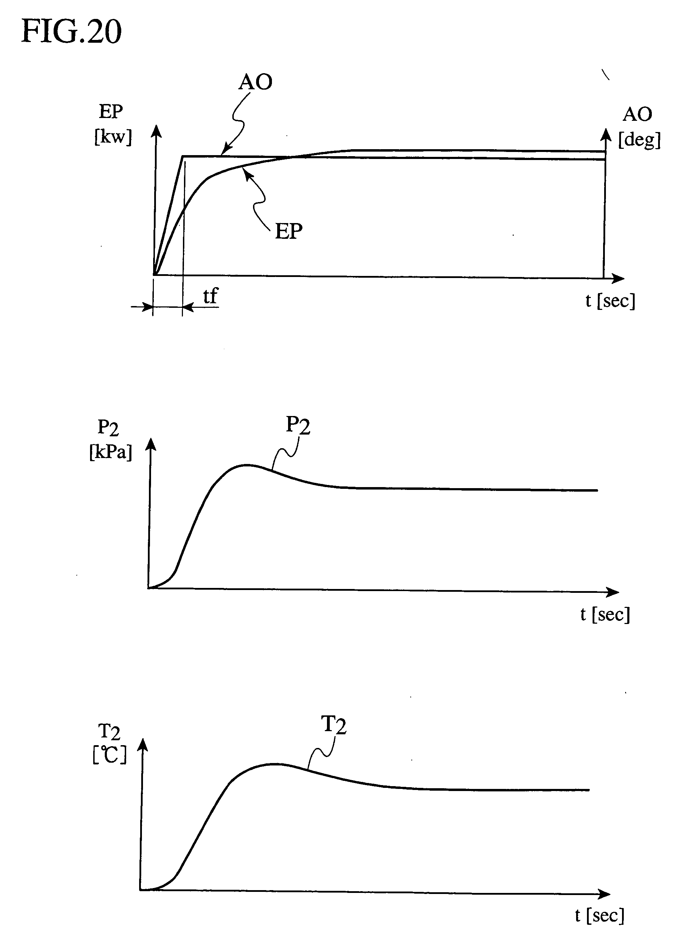

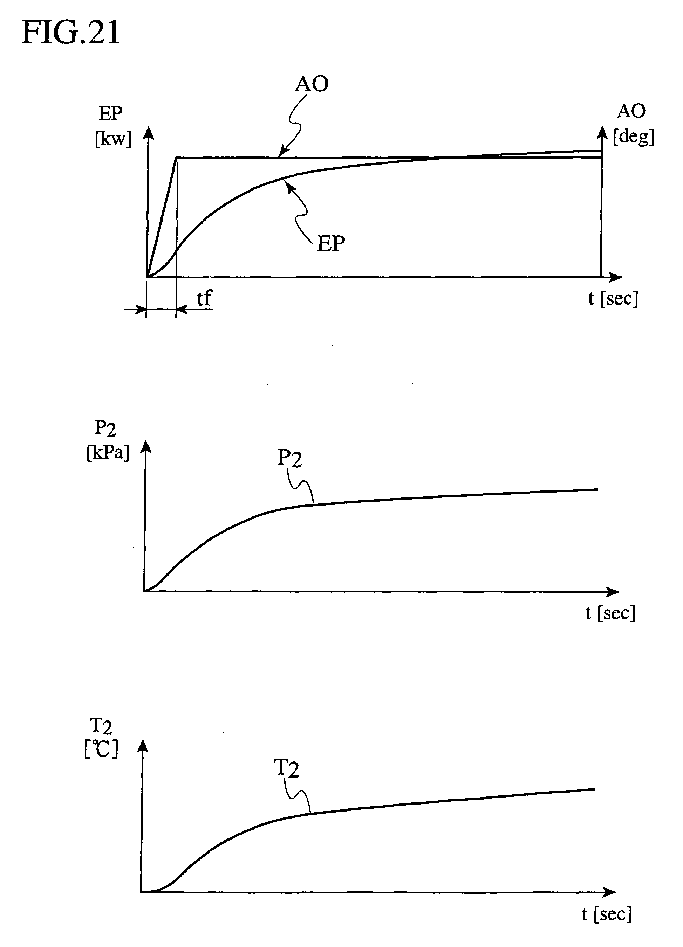

FIG. 20 shows: a time-wise transition of an accelerator opening degree AO to be caused when the acceleration pedal 50 is stepped forward in a low speed range of the vehicle V; and time-wise transitions of an electric power EP required by the main motor 19a, and of the pressure $P_2$ and temperature $T_2$ of delivered air of the air compressor 7, associated with the time-wise transition of accelerator opening degree. In turn, FIG. 21 shows: a time-wise transition of an accelerator opening degree AO to be caused when the acceleration pedal 50 is stepped forward in a medium to high speed range of the vehicle V; and time-wise transitions of an electric power EP required by the main motor 19a, and of the pressure $P_2$ and temperature $T_2$ of delivered air of the air compressor 7, associated with the time-wise transition of accelerator opening degree.

As shown in FIG. 20 and FIG. 21, the accelerator opening degree AO reaches the maximum at a footing time "tf" depending on a stepping speed, and is kept in such a state.

The electric power EP from the stack 3 required by the main motor 19a, exhibits its rising-up, with a gentle gradient in a medium to high speed range (FIG. 21) of the vehicle V, or with a steep gradient in a low speed range (FIG. 20). Commensurately therewith, also the pressure $P_2$ and temperature $T_2$ of delivered air rise up relatively gently in a medium to high speed range (FIG. 21) of the vehicle V, or rise up in a low speed range (FIG. 20) in an overshooting manner.

This embodiment is configured to: mitigate the operation restriction against the stack 3 imposed by the first control part 345, by virtue of the "first correction" by the second control part 347; and supplement this restriction mitigation by virtue of the "second correction" by the third control part 349 taking account of an occurrence condition of the overshooting and a level thereof; thereby compensating for a decreased amount of restriction mitigation due to the overshooting.

The restriction mitigation based on the "first correction" is conducted by multiplying the operation restriction oriented parameter Lp by a correction factor (hereinafter called "first correction factor") k0, and the supplementation of the mitigation by the "second correction" is conducted by multiplying the mitigated limit value Lp by a correction factor (hereinafter called "second correction factor") kx therefor.

The first and second correction factors k0 and kx are each represented by a sum of a basic number part equal to a multiplication unit (=1) and a decimal number part to be varied depending a condition, as follows:

$$k0 = 1 \text{ (basic number part)} + x1 \text{ (decimal number part)}$$

$$kx = 1 \text{ (basic number part)} + x2 \text{ (decimal number part)}$$

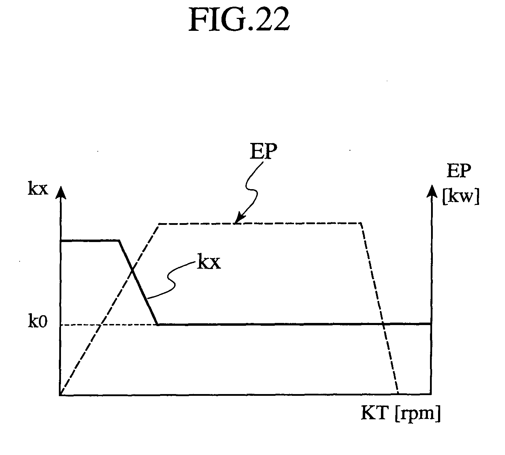

The first correction factor k0 and second correction factor kx will be described with reference to FIG. 22.

FIG. 22 shows: a relationship (broken line) between a revolutions per minute KT of the main motor 19a of the vehicle V and an electric power EP required by the main motor 19a; a relationship (dotted line) between the revolutions per minute KT and the first correction factor k0; and a relationship (solid line) between the revolutions per minute KT and the second correction factor kx. Note that FIG. 22 shows the magnitude of the first correction factor k0 in a manner scaled to the basic number part of the second correction factor kx, as expediency for comparison.

Although the first correction factor k0 takes a value depending on that information from the information collecting system DS32 which represents an operation state of the fuel cell system 301 (more particularly, fluid supply system FLS), this first correction factor k0 does not depend on a revolutions per minute KT of the main motor 19a of the vehicle V as shown in FIG. 22. Namely,

$$k0 = 1 + x1 \text{ (decimal number value depending on the information from DS32).}$$

Note that the correction factor k0 is meaningful even when the decimal number part x1 is zero in value. Namely, since the thermal performance of the fluid supply system FLS is fixed, smaller decimal number parts x1 lead to larger freedom degrees of the second correction factor kx to thereby allow for more effective supplementation of mitigation, such that x1=0 allows for the most effective supplementation.

In turn, although the second correction factor kx does not depend on the operation state of the fuel cell system 301 (more particularly, fluid supply system FLS), the second correction factor kx takes a value depending on that information (revolutions per minute KT of the main motor 19a in this case) from the information provider IP which represents the operation state of the vehicle V as shown in FIG. 22. Namely,

$$kx=1+x2 \text{ (decimal number value depending on the information}$$

$$\text{provider IP).}$$

Also this correction factor kx is meaningful even when its decimal number part x2 is zero in value. Namely, smaller decimal number parts x2 lead to larger freedom degrees of the first correction factor k0 to thereby allow for restriction mitigation in a more effective manner, such that x2=0 allows for the most effective mitigation.

In this embodiment, the decimal number part (x2) of the second correction factor kx has a predetermined positive value in the low speed range of the vehicle V, is monotonously decreased in a transient region from the low speed range to a medium speed range, and is brought to be zero in value in a medium speed range and a high speed range, as apparent from FIG. 22.

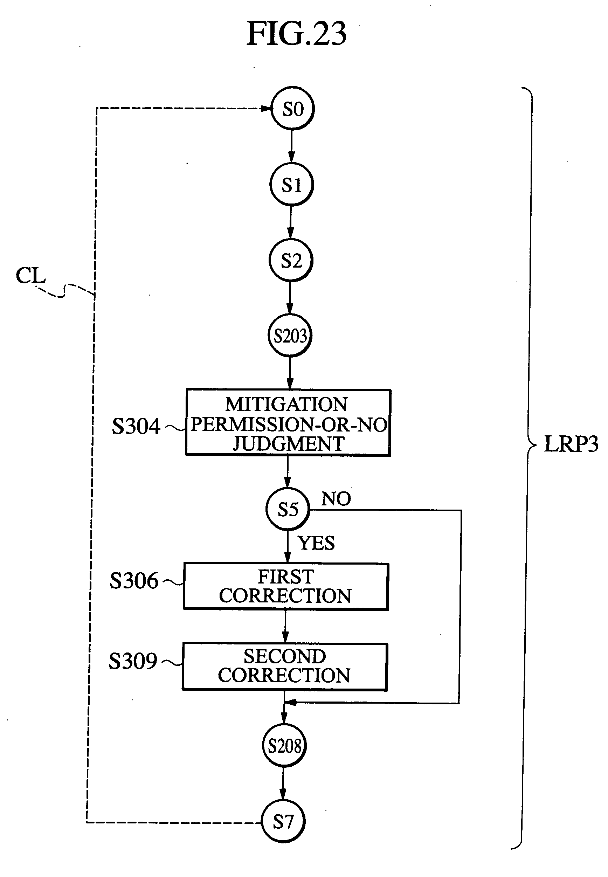

There will be explained a control flow for the controller 343 with reference to FIG. 23. FIG. 23 is a control flowchart showing an operation restriction/mitigation process LRP3 according to the third embodiment.

As shown in FIG. 23, the control flow of the third embodiment: advances from step S0 (FIG. 3) to step S1 to acquire a sucked air temperature $T_1$; further advances to step S2 to acquire an atmospheric pressure $P_0$; then advances to step S203 (Lp setting process in FIG. 17), and at this step, calculates and sets that dynamic upper limit Lp of a delivered air pressure $P_2$ based on the sucked air temperature $T_1$ and atmospheric pressure $P_0$, which Lp is assumed to keep the delivered air temperature $T_2$ at its upper limit Lt or lower; and then advances to step S304 (mitigation permission-or-no judgment process in a basic manner).

At step S304, the mitigation permission-or-no judgment process shown in FIG. 5 is conducted to judge whether mitigation of operation restriction is possible and is to be permitted, or mitigation of operation restriction is impossible and is to be rejected, to thereby establish a value of mitigation permission flag FA ("1"=permission, and "0"=rejection).

The control flow advances from step S304 to step S5 (mitigation permission-or-no judgment) to thereby judge which of "1" and "0" the value of the mitigation permission flag FA has. The control flow (YES) advances from step S5 to step S306 (first correction process) when FA="0", and the control flow (NO) advances from step S5 to step S208 (restriction execution in FIG. 17) when FA="0".

At step S306, the static upper limit Lp of the delivered air pressure $P_2$ set at step S203 is corrected to a dynamic upper limit Lp, by multiplying the static upper limit Lp by the first correction factor k0 commensurate with a current operation state of the fluid supply system FLS (similarly to step S6 in FIG. 3). This mitigates (i.e., increases) the value of Lp. The control flow advances from step S306 to step S306 (second correction process).

At step S309, the upper limit Lp of the delivered air pressure $P_2$ mitigated in restriction at step S306 is further corrected, by multiplying the upper limit Lp by the second correction factor kx commensurate with a current operation state of the vehicle V. This supplements the mitigation of operation restriction (i.e., the limit value Lp is further increased commensurately with the operation state of the vehicle V). The control flow advances from step S309 to step S208 (restriction execution in FIG. 17)

At step S208, there is conducted operation restriction against the stack 3 such that $P_2 \leq Lp$, in accordance with the current upper limit Lp (i.e., static Lp when FA="0" [mitigation rejection], and supplemented dynamic Lp when FA="1" [mitigation permission]). The control flow advances from step S208 to step S7 (FIG. 3).

According to this embodiment, mitigation of operation restriction by the first control part 345 is permitted when the acceleration pedal 50 is stepped forward upon starting or during lower speed running of the vehicle V where the sucked air temperature $T_1$ of the air compressor 7 is dropped, so that the second control part 347 mitigates the limit value Lp, and at that time, such a mitigation is further supplemented by the third control part 349 so as to compensate for a decreased amount of restriction mitigation due to overshooting, thereby enabling more effective achievement of restriction mitigation.

It is justified to appropriately combine this embodiment with the first embodiment, the second embodiment, or the variants thereof.

The disclosure of Japanese patent application No. 2003-112956 is incorporated herein by reference.

While the best embodiments of the present invention have been described, such a description is exemplary, and those skilled in the art will understand that various modifications may be made to the described embodiments without departing from the scope of the appended claims or the spirit of the present invention.

INDUSTRIAL APPLICABILITY

According to the fuel cell system of the present invention, there is restricted an operation of a fuel cell stack based on detected values of an atmospheric pressure and a sucked air temperature of an air compressor so that a temperature of delivered air from the air compressor is kept from exceeding an upper limit, while the operation restriction against the stack is mitigated commensurately with an operation state of a fluid supply system for the stack or of a vehicle to thereby supplement the mitigation dependently on a situation, thereby enabling avoidance of excessive operation restriction against the stack and ensuring an output performance of the stack.

**Claims**

1. A fuel cell system comprising:

   a fuel cell configured to be supplied with a fuel gas containing hydrogen and an oxidative gas containing oxygen;
   an air supplier configured to supply air to the fuel cell;
   a sucked air temperature detector configured to detect a temperature of air sucked by the air supplier;
   an atmospheric pressure detector configured to detect an atmospheric pressure; and
   a control apparatus configured to control an operation of the fuel cell,
   wherein the control apparatus comprises an operation restrictor configured to: restrict an operation of the fuel cell so that the temperature of air delivered from the air supplier is kept from exceeding a predetermined upper limit, based on the sucked air temperature detected by the sucked air temperature detector and the atmospheric pressure detected by the atmospheric pressure detector; and mitigate the restriction of the operation under a predetermined condition.

2. The fuel cell system as claimed in claim 1, wherein the control apparatus further comprises a delivery pressure upper limit setter configured to set an upper limit of a delivery pressure of the air supplier so that a temperature of air delivered by the air supplier is kept from exceeding a predetermined upper limit, based on the sucked air temperature detected by the sucked air temperature detector and the atmospheric pressure detected by the atmospheric pressure detector; and
   wherein the operation restrictor is configured to control the delivery pressure of the air supplier so that the delivery pressure is kept from exceeding the upper limit.

3. The fuel cell system as claimed in claim 2, wherein the control apparatus is configured to calculate an electric power upper limit or electric current upper limit extractable from the fuel cell based on the delivery pressure upper limit acquired from the delivery pressure upper limit setter, and
   wherein the operation restrictor is configured to control power generation so that the power generation is kept from exceeding the electric power upper limit or electric current upper limit.

4. The fuel cell system as claimed in claim 1, further comprising a delivered air temperature detector configured to detect a temperature of air delivered from the air supplier; and
   wherein the operation restrictor is configured to control the air supplier so that the delivered air temperature detected by the delivered air temperature detector is kept from exceeding a predetermined value.

5. The fuel cell system as claimed in claim 1, further comprising: an outside air temperature detector configured to detect an outside air temperature, and a sucked air temperature change predictor configured to predict a change of a sucked air temperature; and
   wherein operation restriction is transiently mitigated, when the sucked air temperature detected by the sucked air temperature detector is higher than the outside air temperature by a predetermined amount, and when the sucked air temperature change predictor has predicted a drop of the sucked air temperature.

6. The fuel cell system as claimed in claim 5, wherein the sucked air temperature change predictor is configured to detect starting from stoppage of a vehicle or acceleration in an extremely low speed state of the vehicle.

7. The fuel cell system as claimed in claim 5, wherein the mitigation of operation restriction is rejected when the delivered air pressure of the air supplier is increasing at a predetermined change rate or larger.

8. The fuel cell system as claimed in claim 5, wherein the mitigation of operation restriction is rejected when the sucked air temperature of the air supplier has failed to drop by a predetermined amount after a predetermined elapsed time.

9. The fuel cell system as claimed in claim 1, wherein the upper limit of the delivered air temperature is settled based on that one of the air supplier, the fuel cell, and a humidifier configured to humidify air to be supplied to the fuel cell, which has the lowest thermally allowable temperature.

10. The fuel cell system as claimed in claim 2, wherein the mitigation of operation restriction is conducted based on heat capacities of the air compressor and components downstream thereof, for a period of time during which the components are raised in temperature up to the thermally allowable temperatures, respectively.

11. The fuel cell system as claimed in claim 4, wherein the mitigation of operation restriction is conducted based on heat capacities of the air compressor and components downstream thereof, for a period of time during which the components are raised in temperature up to the thermally allowable temperatures, respectively.

12. The fuel cell system as claimed in claim 3, wherein the mitigation of operation restriction is conducted to increase electric power or electric current to be extracted, while allowed as a time rating for the restricted pressure of delivered air.

13. A fuel cell system comprising:

a supply system configured to supply utilities containing an oxidizer;
a fuel cell configured to generate electric power by using the utilities supplied from the supply system; and
a controller configured to control the supply system to operate the fuel cell,

wherein the controller comprises:

a first control part configured to restrict a supply condition of the oxidizer; and
a second control part configured to mitigate the restriction of the supply condition, depending on an operational state of the supply system.

14. The fuel cell system as claimed in claim 13, wherein the first control part has a limit value for restricting the supply condition, and the second control part is configured to mitigate the restriction by correcting the limit value.

15. The fuel cell system as claimed in claim 13, provided in a vehicle having the fuel cell as a main electric-power source, wherein the controller has a third control part configured to supplement the mitigation of restriction depending on an operational state of the vehicle.

16. A fuel cell system comprising:

a fuel cell configured to be supplied with a fuel gas containing hydrogen and an oxidative gas containing oxygen;
an air supply means for supplying air to the fuel cell;
a sucked air temperature detection means for detecting a temperature of air sucked by the air supply means;
an atmospheric pressure detection means for detecting an atmospheric pressure; and
a control apparatus configured to control an operation of the fuel cell;
wherein the control apparatus comprises an operation restricting means for: restricting an operation of the fuel cell so that the temperature of air delivered from the air supply means is kept from exceeding a predetermined upper limit, based on the sucked air temperature detected by the sucked air temperature detection means and the atmospheric pressure detected by the atmospheric pressure detection means; and mitigating the restriction of the operation under a predetermined condition.

17. A fuel cell system comprising:

a supply system configured to supply utilities containing an oxidizer;
a fuel cell configured to generate electric power by using the utilities supplied from the supply system; and
a controller configured to control the supply system to operate the fuel cell;

wherein the controller comprises:

a first control means for restricting a supply condition of the oxidizer; and
a second control means for mitigating the restriction of the supply condition, depending on an operational state of the supply system.

18. A control method for a fuel cell system comprising a fuel cell configured to be supplied with a fuel gas containing hydrogen and an oxidative gas containing oxygen, an air supplier configured to supply air to the fuel cell, a sucked air temperature detector configured to detect a temperature of air sucked by the air supplier, an atmospheric pressure detector configured to detect an atmospheric pressure, and a control apparatus configured to control an operation of the fuel cell, the method comprising:

restricting an operation of the fuel cell so that the temperature of air delivered from the air supplier is kept from exceeding a predetermined upper limit, based on the sucked air temperature detected by the sucked air temperature detector and the atmospheric pressure detected by the atmospheric pressure detector; and mitigating the restriction of the operation under a predetermined condition.

19. A control method for a fuel cell system comprising a supply system configured to supply utilities containing an oxidizer, and a fuel cell configured to generate electric power by using the utilities supplied from the supply system, to control the supply system to operate the fuel cell, the method comprising:

restricting a supply condition of the oxidizer; and
mitigating the restriction of the supply condition, depending on an operational state of the supply system.

FIG.1

EP 1 643 574 A1

# FIG.2

$$\triangle Tr = \frac{T_{12} - T_{11}}{t}$$

# FIG.3

S0 — ( ENTER )

S1 — | ACQUIRE $T_1$ |

S2 — | ACQUIRE $P_0$ |

S3 — | OPERATION RESTRICTION PROCESS |

S4 — | MITIGATION PERMISSION-OR-NO JUDGMENT PROCESS |

CL

S5 — ◇ FA=1? ◇ — NO

YES

S6 — | MITIGATION PROCESS $\left( \begin{array}{c} \text{SET Lp} \\ P_2 \leqq Lp \end{array} \right)$ |

S7 — ( EXIT )

LRP1

# FIG.4

# FIG.5

Flowchart:

S3 →

S20 → ACQUIRE $T_0$

S22 → DT>$Th_1$ ? — NO →

YES ↓

S24 → $T_1$ CHANGE PREDICTION PROCESS

S26 → $T_1$ DROP IS EXPECTABLE ? — NO →

YES ↓

S28 → FA=1

S30 → FA=0

S4 { (grouping bracket around S20–S28)

→ S5

# FIG.6

```
                        ( S22 )
                           │
  S40                      ▼
  ┌─────────────────────────────────┐
  │          ACQUIRE  Vs            │
  └─────────────────────────────────┘
                           │
  S42                      ▼
             ╱─────────────────────╲          NO
            ◁      Vs<Th₂           ▷──────────────┐
             ╲        ?            ╱                │
  S24          ╲─────────────────╱                 │
                      │ YES                         │
  S44                 ▼              S46            ▼
  ┌─────────────────────────┐    ┌─────────────────────────┐
  │      T₁ DROP IS          │    │      T₁ DROP IS          │
  │      EXPECTABLE          │    │   NOT EXPECTABLE         │
  └─────────────────────────┘    └─────────────────────────┘
                      │                            │
                      ▼◀───────────────────────────┘
                  ( S26 )
```

# FIG.7

```
                    ( S2 )
                       │
                       ▼
                    ( S10 )
                       │
                       ▼
        ┌─────────────────────────────┐
S50 ~   │      Lp  CONFIRMATION        │
        └─────────────────────────────┘
                       │
                       ▼
        ┌─┬─────────────────────────┬─┐
S52 ~   │ │       Lp ──► Lg          │ │
        └─┴─────────────────────────┴─┘
                       │
                       ▼
        ┌─────────────────────────────┐
S54 ~   │           G ≦ Lg            │
        └─────────────────────────────┘
                       │
                       ▼
                    ( S4 )
```

# FIG.8A

Lp [kPa]

Lpb2    (P₀ = CONSTANT)

Lpa2    Lpb1

Lpa1    Lpb    Lpa

T₁₂    T₁₁    T₁ [℃]

$$\triangle Tr = \frac{T_{12} - T_{11}}{t}$$

# FIG.8B

Lg [kW]    Cg {Lg=f12(Lp)}

(P₀ = CONSTANT)

Lgb2
Lga2
Lgb1
Lga1

Lpa1    Lpa2    Lp kPa
Lpb1    Lpb2

# FIG.8C

Lg [kW]

Lgb2    (P₀ = CONSTANT)

Lga2    Lgb1

Lga1    Lgb    Lga

T₁₂    T₁₁    T₁ [℃]

$\triangle Tr$

# FIG.9

S4

S66 — MITIGATION PERMISSION-OR-NO JUDGMENT PROCESS

S68 — $FA \cap FB \cap FC = 1$ ? — NO

YES

S6

S7

# FIG.10

S4

S80 — S80
DP$_2$ CALCULATION PROCESS

S82 — ASCENDING SIDE ?

S66

NO

YES

S84 — FB=1

S86 — FB=0

S68

# FIG.11

$$S4$$

S91 — ACQUIRE $P_2$

S92 — SELECT $\{P_2\}$    $(0 \leqq n \leqq N)$

S93 — CALCULATE $DP_2$

S80 {

S94 — $DP_2 < Th_3$ ?  →  NO

YES

S95 — FC = 1        S96 — FC = 0

$$S82$$

# FIG.12

```
        ( S4 )
           │
           ▼
┌──────────────────────────┐
│         MITIGATION        │
S106 ─    PERMISSION-OR-NO   │
│     JUDGMENT  PROCESS      │
└──────────────────────────┘
           │
           ▼
S108 ┐
    ╱─────────────────────╲         NO
   ◄   FA∩FD∩FE＝1          ►────────┐
    ╲─────────────────────╱         │
           │                        │
          YES                       │
           ▼                        │
        ( S6 )                      │
           │                        │
           ▼◄───────────────────────┘
        ( S7 )
```

EP 1 643 574 A1

# FIG.13

# FIG.14

S4

S122 — SELECT $\{T_1\}$ $(0 \leqq m \leqq M)$

S123 — CALCULATE $DT_1$

S110

S124 — $DT_1 > Th_4$ ? — NO

YES

S125 — FE = 1

S126 — FE = 0

S112

# FIG.15

# FIG.16

# FIG.17

FIG.18

# FIG.19

## FIG.20

# FIG.21

# FIG.22

# FIG.23

```
                                    ⟨S0⟩ ◀┐
                                     │    │
                                     ▼    │
                                    ⟨S1⟩   │
                                     │    │
                                     ▼    │
                                    ⟨S2⟩   │
CL                                   │    │
                                     ▼    │
                                   ⟨S203⟩  │
                                     │    │
                                     ▼    │
                    ┌────────────────────────┐
           S304 ~   │      MITIGATION         │           LRP3
                    │  PERMISSION-OR-NO        │
                    │      JUDGMENT            │
                    └────────────────────────┘
                                     │
                                     ▼       NO
                                    ⟨S5⟩ ──────────┐
                                     │             │
                                    YES            │
                                     ▼             │
                    ┌────────────────────────┐     │
           S306 ~   │        FIRST            │     │
                    │      CORRECTION         │     │
                    └────────────────────────┘     │
                                     │             │
                                     ▼             │
                    ┌────────────────────────┐     │
           S309 ~   │        SECOND           │     │
                    │      CORRECTION         │     │
                    └────────────────────────┘     │
                                     │             │
                                     ▼ ◀───────────┘
                                   ⟨S208⟩
                                     │
                                     ▼
                                    ⟨S7⟩
```

**INTERNATIONAL SEARCH REPORT**

| International application No. |
| --- |
| PCT/JP2004/005371 |

A. CLASSIFICATION OF SUBJECT MATTER
Int.Cl⁷ H01M8/04

According to International Patent Classification (IPC) or to both national classification and IPC

B. FIELDS SEARCHED

Minimum documentation searched (classification system followed by classification symbols)
Int.Cl⁷ H01M8/04

Documentation searched other than minimum documentation to the extent that such documents are included in the fields searched
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 62-103979 A (Mitsubishi Electric Corp.), 14 May, 1987 (14.05.87), Page 4, upper right column, line 5 to page 5, upper right column, line 5 (Family: none) | 13,17,19 |
| X | JP 2002-117875 A (Nissan Motor Co., Ltd.), 19 April, 2002 (19.04.02), Full text (Family: none) | 13,17,19 |
| X | JP 60-160573 A (Shimadzu Corp.), 22 August, 1985 (22.08.85), Full text (Family: none) | 13,17,19 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 July, 2004 (23.07.04) | 17 August, 2004 (17.08.04) |

| Name and mailing address of the ISA/ Japanese Patent Office | Authorized officer |
| --- | --- |
| Facsimile No. | Telephone No. |

Form PCT/ISA/210 (second sheet) (January 2004)

**INTERNATIONAL SEARCH REPORT**

International application No.

PCT/JP2004/005371

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-335029 A (Hitachi, Ltd.),<br>17 December, 1993 (17.12.93),<br>(Family: none) | 1-19 |
| A | JP 2002-352826 A (Honda Motor Co., Ltd.),<br>06 December, 2002 (06.12.02),<br>(Family: none) | 1-19 |
| A | JP 2003-21071 A (Nagano Keiki Kabushiki Kaisha),<br>24 January, 2003 (24.01.03),<br>(Family: none) | 1-19 |
| A | JP 59-18577 A (The Kansai Electric Power Co., Inc.),<br>30 January, 1984 (30.01.84),<br>(Family: none) | 1-19 |

Form PCT/ISA/210 (continuation of second sheet) (January 2004)